# EUROPEAN PATENT APPLICATION

(11) **EP 4 814 588 A1**
(43) Date of publication of application: **30.09.2026**
(21) Application number: 25188379.9
(22) Date of filing: 09.07.2025
(51) Int. Cl.: G03G 15/00, G06F 3/12

(54) **IMAGE FORMING APPARATUS, IMAGE FORMING PROGRAM, AND IMAGE FORMING SYSTEM**

(30) Priority: 26.03.2025 JP 2025051870
(71) Applicant: FUJIFILM Business Innovation Corp., Minato-ku Tokyo (JP)
(72) Inventor: ANDO, Yuki, Yokohama-shi, Kanagawa (JP); TANAKA, Shogo, Yokohama-shi, Kanagawa (JP)
(74) Representative: Becker Kurig & Partner Patentanwälte mbB

(57) **Abstract**

An image forming apparatus includes an image forming unit that forms an image on a recording medium under a predetermined condition, and a correction unit that, in continuously forming the image on plural recording media, corrects the condition in accordance with a reading result of the image formed on a specific number of recording media immediately after a start of forming of the image, in which the image is formed such that the recording medium on which the image is formed under the condition corrected by the correction unit is set as the first recording medium.

## Description

### BACKGROUND OF THE INVENTION

### (i) Field of the Invention

The invention relates to an image forming apparatus, an image forming program, and an image forming system.

### (ii) Description of Related Art

In the related art, for example, techniques disclosed in JP2017-227730A, JP2018-004954A, and JP2016-139014A have been suggested as a technique related to an image forming apparatus.

JP2017-227730A discloses a configuration providing a function of determining, in a case where image quality adjustment is performed based on an adjustment image when the adjustment image is printed during output of a job in which real time adjustment is performed, whether or not printing after the adjustment can be executed on a transfer medium that is a target to which the job is output by an image forming portion, and in a case where the printing after the adjustment cannot be executed, stopping the printing of the adjustment image.

JP2018-004954A discloses a configuration including an image forming portion that forms a plurality of marks and an image on a recording medium, a reading portion that reads the plurality of marks formed on the recording medium a plurality of times, and a control portion that controls the image forming portion such that at least one of a position or a size of the image formed on the recording medium is corrected in accordance with a correction amount obtained using a mark position at which an amount of change in a position of each of the plurality of marks read the plurality of times is less than or equal to a predetermined threshold value.

JP2016-139014A discloses a configuration including a color deviation adjustment portion that adjusts color deviation of each image formed by a plurality of image forming portions, in which the color deviation adjustment portion, in a case where a resting time within a predetermined time from a previous job is reached and printing of a job is started, executes additive correction of performing registration adjustment in a sub-scanning direction by adding an additive value of a predetermined amount to at least one of each of the images formed by the plurality of image forming apparatuses, between the start of the job and the end of the predetermined time.

### SUMMARY OF THE INVENTION

An object of the invention is to reduce or eliminate an operation load of a user compared to a case where the user forms an image again in executing so-called real time correction of correcting a forming condition of the image in accordance with a reading result of the image.

According to a first aspect of the present disclosure, there is provided an image forming apparatus including an image forming unit that forms an image on a recording medium under a predetermined condition, and a correction unit that, in continuously forming the image on a plurality of recording media, corrects the condition in accordance with a reading result of the image formed on a specific number of recording media immediately after a start of forming of the image, in which the image is formed such that the recording medium on which the image is formed under the condition corrected by the correction unit is set as a first recording medium.

According to a second aspect of the present disclosure, there is provided an image forming apparatus including an image forming unit that forms an image on a recording medium under a predetermined condition, a correction unit that, in continuously forming the image on a plurality of recording media, corrects the condition in accordance with a reading result of the image formed on a specific number of recording media immediately after a start of forming of the image, and a re-execution unit that forms the image again under the condition corrected by the correction unit, in which an image forming operation is stopped until correction made by the correction unit is reflected on the image.

According to a third aspect of the present disclosure, in the image forming apparatus according to the second aspect, the re-execution unit may form the image again for only the recording medium for which the reading result of the image exceeds a predetermined threshold value among the specific number of recording media.

According to a fourth aspect of the present disclosure, in the image forming apparatus according to the second aspect, the re-execution unit may form the image again without waiting from forming of the image on the specific number of recording media to reflection of the correction made by the correction unit on the image.

According to a fifth aspect of the present disclosure, in the image forming apparatus according to the fourth aspect, the re-execution unit may execute forming of the image again for all recording media on which the image is formed before the correction made by the correction unit is reflected on the image, in addition to the specific number of recording media.

According to a sixth aspect of the present disclosure, in the image forming apparatus according to the second aspect, the correction unit may execute a correction operation between an end of a reading operation of the image and forming of the image again via the re-execution unit.

According to a seventh aspect of the present disclosure, in the image forming apparatus according to the sixth aspect, the correction operation executed by the correction unit may be a correction operation not causing forming and reading of the image on the recording medium.

According to an eighth aspect of the present disclosure, in the image forming apparatus according to the second aspect, the re-execution unit may change a part of the image in executing an operation of forming the image again.

According to a ninth aspect of the present disclosure, in the image forming apparatus according to the eighth aspect, the image may include a correction image for obtaining a correction amount of the condition in addition to a request image requested by a user, and the re-execution unit may change the image to the image excluding the correction image.

According to a tenth aspect of the present disclosure, the image forming apparatus according to the first aspect may further include a spare discharge portion that discharges at least the recording medium for which the reading result of the image exceeds a predetermined threshold value among the specific number of recording media.

According to an eleventh aspect of the present disclosure, the image forming apparatus according to the second aspect may further include a setting unit that sets at least one of a setting of the specific number, whether or not to perform re-execution via the re-execution unit, or whether or not an operation of forming the image on the plurality of recording media is available.

According to a twelfth aspect of the present disclosure, in the image forming apparatus according to the first aspect, the correction unit may obtain a plurality of conditions as the condition and, in a case where the number of recording media necessary for obtaining the plurality of conditions varies, adopt a larger value of the number of necessary recording media as the specific number.

According to a thirteenth aspect of the present disclosure, there is provided an image forming program causing a computer to function as each portion of the image forming apparatus according to any one of the first aspect to the twelfth aspect.

According to a fourteenth aspect of the present disclosure, there is provided an image forming system including an image forming unit that forms an image on a recording medium under a predetermined condition, a correction unit that, in continuously forming the image on a plurality of recording media, corrects the condition in accordance with a reading result of the image formed on a specific number of recording media immediately after a start of forming of the image, and a processor configured to form the image such that the recording medium on which the image is formed under the condition corrected by the correction unit is set as a first recording medium.

According to the first aspect, the second aspect, and the fourteenth aspect of the present disclosure, an operation load of a user can be reduced and eliminated compared to a case where the user forms an image again in executing so-called real time correction of correcting an image forming condition in accordance with a reading result of the image.

According to the second aspect of the present disclosure, the number of useless recording media (waste paper) generated can be reduced to a small number compared to a case where the image forming operation continues without stopping until the correction made by the correction unit is reflected on the image.

According to the third aspect of the present disclosure, the number of useless recording media (waste paper) generated can be reduced to a small number compared to a case where the re-execution unit forms the image again for all recording media.

According to the fourth aspect of the present disclosure, an effect of a change in a temperature or the like of the image forming unit on the image during a waiting time can be reduced compared to a case where the re-execution unit waits until the correction made by the correction unit is reflected on the image.

According to the fifth aspect of the present disclosure, the re-execution unit easily determines whether or not to execute forming of the image on the recording medium again.

According to the sixth aspect of the present disclosure, correction accuracy of the image can be improved compared to a case where the correction unit does not execute the correction operation between the end of the reading operation of the image and forming of the image again via the re-execution unit.

According to the seventh aspect of the present disclosure, a delay in forming the image caused by performing the correction operation again can be avoided compared to a case where the correction operation executed by the correction unit is a correction operation causing forming and reading of the image on the recording medium.

According to the eighth aspect of the present disclosure, consumption of a developer or the like can be reduced compared to a case where the re-execution unit does not change a part of the image in executing the operation of forming the image again.

According to the ninth aspect of the present disclosure, consumption of the developer or the like can be reduced compared to a case where the re-execution unit forms the correction image again.

According to the tenth aspect of the present disclosure, the recording medium on which the image is formed by the re-execution unit can be easily determined compared to a case where all recording media are discharged to an identical discharge portion.

According to the eleventh aspect of the present disclosure, various needs of a user can be fulfilled compared to a case where the image forming apparatus does not include the setting unit that sets at least one of the setting of the specific number, whether or not to perform re-execution via the re-execution unit, or whether or not the operation of forming the image on the plurality of recording media is available.

According to the twelfth aspect of the present disclosure, the correction unit can securely execute the correction operation.

According to the thirteenth aspect of the present disclosure, a version update and the like can be supported compared to a case where all of each portion of the image forming apparatus are configured with hardware.

### BRIEF DESCRIPTION OF THE DRAWINGS

Exemplary embodiment(s) of the present invention will be described in detail based on the following figures, wherein:
FIG. 1 is a schematic diagram illustrating an overall configuration of an image forming apparatus to which an image forming program according to Exemplary Embodiment 1 of the invention is applied;
FIG. 2 is a schematic diagram illustrating the overall configuration of the image forming apparatus to which the image forming program according to Exemplary Embodiment 1 of the invention is applied;
FIG. 3 is a configuration diagram illustrating an image forming portion of the image forming apparatus to which the image forming program according to Exemplary Embodiment 1 of the invention is applied;
FIGS. 4A to 4L are schematic diagrams each illustrating post-processing performed by a post-processing portion of an image forming apparatus to which an image forming program according to Exemplary Embodiment 1 of the invention is applied;
FIG. 5 is a block diagram illustrating a control device of the image forming apparatus to which the image forming program according to Exemplary Embodiment 1 of the invention is applied;
FIG. 6 is a plan configuration view illustrating a recording paper sheet on which a test image is formed;
FIGS. 7A to 7D are descriptive diagrams illustrating the test image in an enlarged manner;
FIGS. 8A and 8B are descriptive diagrams illustrating the test image in an enlarged manner;
FIG. 9 is a descriptive diagram illustrating arrangement of recording paper sheets on which an image is formed by the image forming apparatus to which the image forming program according to Exemplary Embodiment 1 of the invention is applied;
FIGS. 10A to 10F are descriptive diagrams each illustrating misregistration of the image;
FIGS. 11A and 11B are descriptive diagrams each illustrating the misregistration of the image;
FIG. 12 is a flowchart illustrating an operation of real time correction in an image forming apparatus of the related art;
FIG. 13 is a configuration diagram illustrating a UI portion of the image forming apparatus to which the image forming program according to Exemplary Embodiment 1 of the invention is applied;
FIG. 14 is a flowchart illustrating an operation of real time correction in the image forming apparatus to which the image forming program according to Exemplary Embodiment 1 of the invention is applied;
FIG. 15 is a descriptive diagram illustrating a series of print operations in the image forming apparatus to which the image forming program according to Exemplary Embodiment 1 of the invention is applied;
FIG. 16 is a descriptive diagram illustrating the image formed on the recording paper sheet;
FIG. 17 is a schematic diagram illustrating a state of discharge of the recording paper sheet in the image forming apparatus to which the image forming program according to Exemplary Embodiment 1 of the invention is applied;
FIG. 18 is a configuration diagram illustrating a UI portion of an image forming apparatus to which an image forming program according to Exemplary Embodiment 2 of the invention is applied;
FIG. 19 is a flowchart illustrating an operation of real time correction in the image forming apparatus to which the image forming program according to Exemplary Embodiment 2 of the invention is applied;
FIG. 20 is a schematic diagram illustrating a state of discharge of a recording paper sheet in the image forming apparatus to which the image forming program according to Exemplary Embodiment 2 of the invention is applied;
FIG. 21 is a schematic diagram illustrating another state of discharge of the recording paper sheet in the image forming apparatus to which the image forming program according to Exemplary Embodiment 2 of the invention is applied; and
FIG. 22 is a schematic diagram illustrating another state of discharge of the recording paper sheet in the image forming apparatus to which the image forming program according to Exemplary Embodiment 1 of the invention is applied.

### DETAILED DESCRIPTION OF THE INVENTION

Hereinafter, exemplary embodiments of the invention will be described with reference to the drawings.

### [Exemplary Embodiment 1]

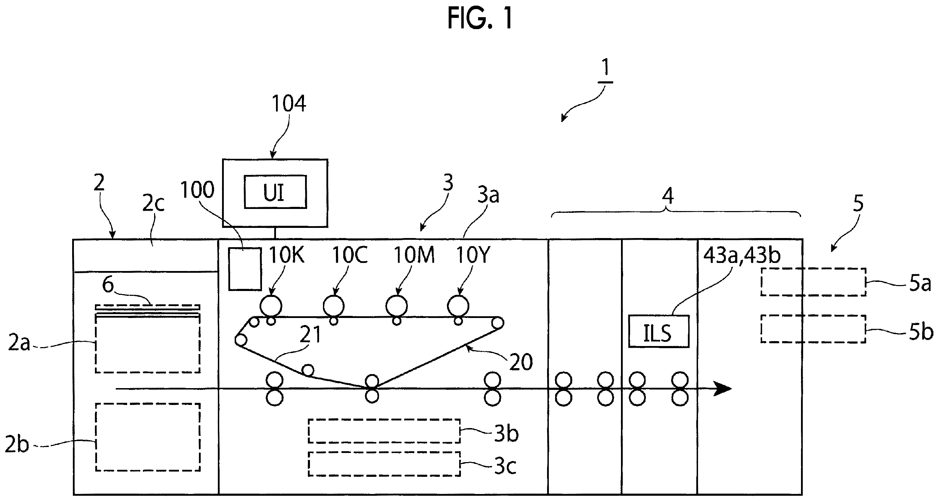

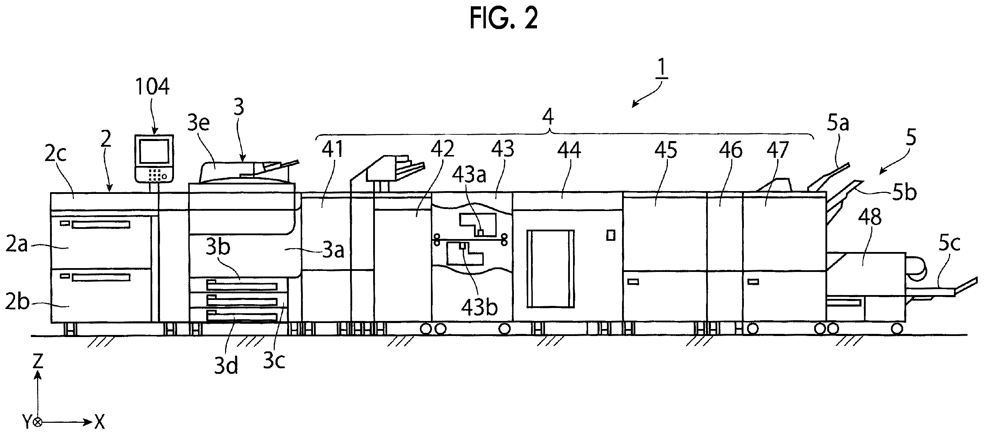

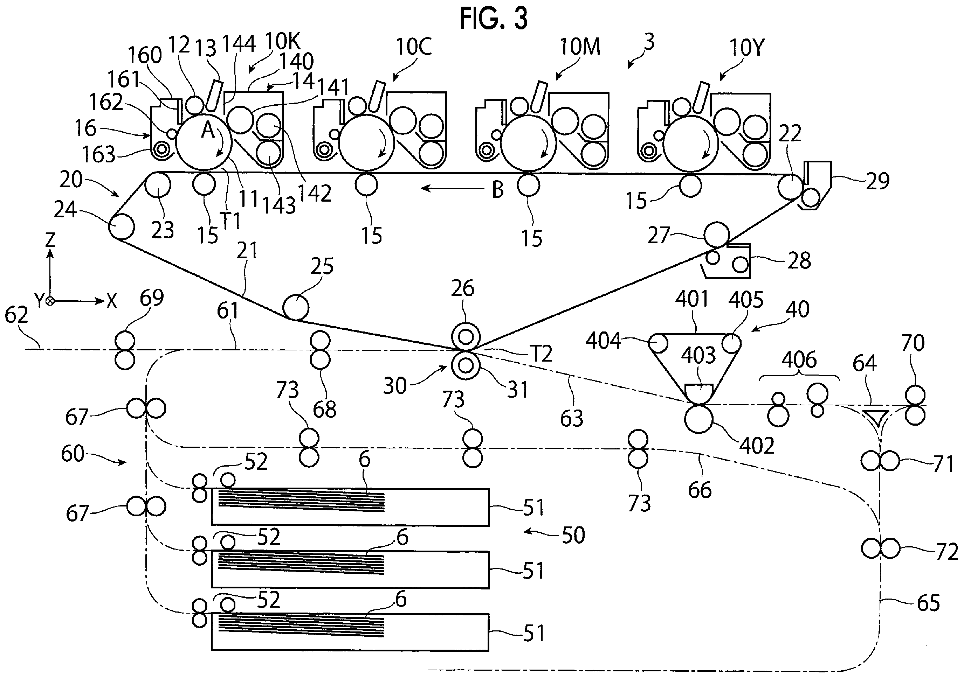

FIG. 1 is a schematic diagram illustrating an overall configuration of an image forming apparatus to which an image forming program and an image forming system according to Exemplary Embodiment 1 are applied. FIG. 2 is a schematic diagram illustrating the overall configuration of the image forming apparatus to which the image forming program and the image forming system according to Exemplary Embodiment 1 are applied. FIG. 3 is a configuration diagram illustrating an image forming portion of the image forming apparatus to which the image forming program and the image forming system according to Exemplary Embodiment 1 are applied. In FIG. 2, arrow X indicates a horizontal direction of the image forming apparatus, arrow Y indicates a depth direction of the image forming apparatus, and arrow Z indicates a vertical direction of the image forming apparatus.

### <Overall Configuration of Image Forming Apparatus>

An image forming apparatus 1 is configured as, for example, a full color production printer. As illustrated in FIG. 1, the image forming apparatus 1 broadly includes a paper feed portion 2, an image forming portion 3, a post-processing portion 4, and a discharge portion 5. The image forming apparatus 1 does not necessarily include all of the paper feed portion 2, the post-processing portion 4, the discharge portion 5, and the like. For example, the image forming apparatus 1 may not include the post-processing portion 4, and the paper feed portion 2, the image forming portion 3, and the like may be disposed in an apparatus body 3a constituting the image forming portion 3.

The paper feed portion 2 of the image forming apparatus 1 is configured with, for example, two high capacity trays 2a and 2b that include an air suction mechanism, a multifeed detection device, and the like and that are disposed above and below each other, and a manual paper feed tray 2c disposed above the high capacity tray 2a. The paper feed portion 2 is not limited to the feed portion including the air suction mechanism, the multifeed detection device, and the like.

The image forming portion 3 of the image forming apparatus 1 forms an image such as a full color or monochrome image on one side or two sides of a recording paper sheet 6 as an example of a recording medium supplied from the paper feed portion 2. The image forming apparatus 1 according to Exemplary Embodiment 1 includes a single or a plurality of paper feed trays 3b, 3c, ... in the image forming portion 3.

The post-processing portion 4 performs required post-processing such as bending correction processing, inspection (reading) processing of the image, stack processing, binding processing, folding processing, and perforation processing on the recording paper sheet 6 on which the image is formed on one side or two sides by the image forming portion 3.

The discharge portion 5 discharges the recording paper sheet 6 on which the required post-processing is performed by the post-processing portion 4 to a single or a plurality of discharge trays 5a, 5b, .... A fixed tray, a stack tray, a booklet tray, or the like is used as the discharge trays 5a, 5b, .... The fixed tray is fixedly disposed. The stack tray discharges the recording paper sheet 6 by moving along a top-to-bottom direction that is the vertical direction Z, or a front-to-rear direction that is the depth direction Y, as necessary. The booklet tray discharges a booklet consisting of a plurality of recording paper sheets 6 on which the binding processing is performed, by moving along the horizontal direction.

To further describe the configuration of the image forming apparatus 1 as the production printer, as illustrated in FIG. 2, the image forming apparatus 1 includes the paper feed portion 2 on an upstream side (in the drawing, a left side) along a transport direction of the recording paper sheet 6 with reference to the image forming portion 3. The image forming apparatus 1 includes the post-processing portion 4 and the discharge portion 5 on a downstream side (in the drawing, a right side) along the transport direction of the recording paper sheet 6 of the image forming portion 3. The post-processing portion 4 is configured with, for example, a bending correction device 41, a paper sheet insertion device 42, an image inspection device 43, a high capacity stacker 44, a head and tail cutting device 45, a folding device 46, a binding device 47 having a punch and discharge function, and a fore edge cutting device 48 having a square back folding function. The discharge portion 5 is configured with the fixed tray 5a and the stack tray 5b as a discharge tray mounted in the binding device 47, and a booklet tray 5c mounted in the fore edge cutting device 48.

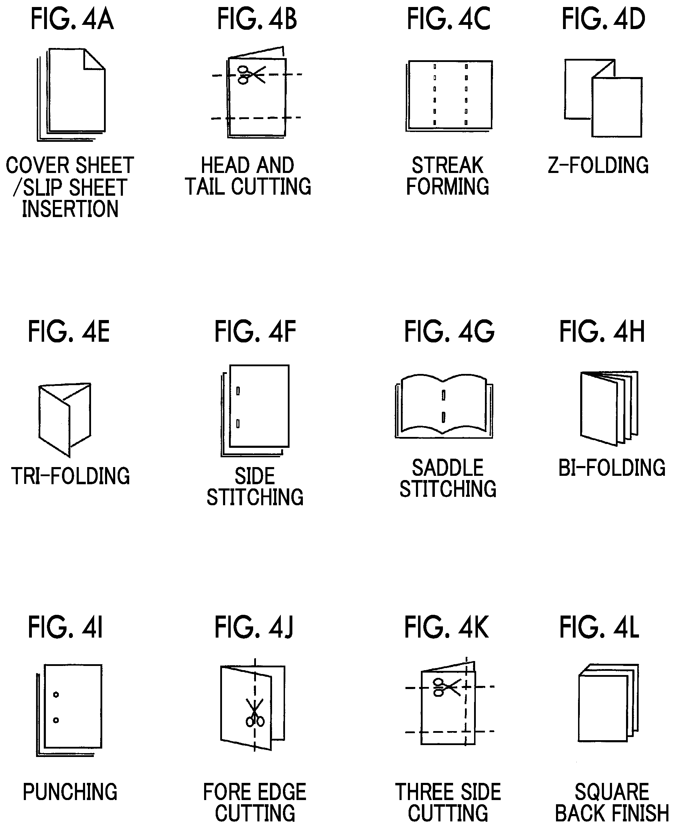

The bending correction device 41 corrects bending of the recording paper sheet 6 discharged from the image forming portion 3. The paper sheet insertion device 42, as illustrated in FIG. 4A, inserts a cover sheet, a slip sheet, or the like at a predetermined position in a plurality of recording paper sheets 6 continuously discharged from the image forming portion 3. The image inspection device 43 inspects a printed matter by reading the image including a test image formed on a front side and a rear side of the recording paper sheet 6 via first and second in line sensors (ILSs) 43a and 43b as an example of a reading unit (an image sensor). The first and second ILSs 43a and 43b can read the image with a predetermined resolution and color (brightness, chroma, and hue). The high capacity stacker 44 connects the image inspection device 43 to the head and tail cutting device 45 on the subsequent stage and adjusts a processing speed by sequentially stacking a large number of recording paper sheets 6. The head and tail cutting device 45, as illustrated in FIG. 4B, cuts an upper side and a lower side (a head and a tail) of the recording paper sheet 6 over a required width. The head and tail cutting device 45, as illustrated in FIG. 4C, also executes, for example, processing of forming streaks on the recording paper sheet 6. The folding device 46, as illustrated in FIGS. 4D and 4E, performs the folding processing such as Z-folding or tri-folding on the recording paper sheet 6. The binding device 47 sorts and stacks the recording paper sheet 6 after passing through the folding device 46 and, as illustrated in FIGS. 4F to 4I, performs bi-folding or perforation processing in addition to the binding processing such as side stitching or saddle stitching. The recording paper sheet 6 on which the binding processing such as edge stitching or saddle stitching, perforation processing, or the like is performed is discharged to the fixed tray 5a or the stack tray 5b of the discharge portion 5 in accordance with content or the like of the post-processing. The fore edge cutting device 48, as illustrated in FIGS. 4J to 4L, performs fore edge cutting processing and three side cutting processing of cutting upper and lower edges and another one edge of the recording paper sheet 6 on which the saddle stitching processing or the like is performed, and further performs square back finish processing or the like. The recording paper sheet 6 on which the fore edge cutting processing or the like is performed is sequentially discharged to the booklet tray 5c disposed in the horizontal direction.

Next, a configuration of the image forming portion 3 of the image forming apparatus 1 will be described.

As illustrated in FIG. 3, the image forming portion 3 of the image forming apparatus 1 broadly includes a plurality of image creating devices 10, an intermediate transfer device 20, a paper feed device 50, a paper sheet transport device 60, a fixing device 40, and the like. **In** the illustrated exemplary embodiment, the image forming portion 3, as illustrated in FIG. 2, includes an image reading device 3e that reads an image of an original document, at an upper end of the image forming portion 3.

The plurality of image creating devices 10, as illustrated in FIG. 3, form a toner image (a color material image) developed with toner as an example of a color material constituting a developer. The intermediate transfer device 20 holds and transports each toner image formed by each image creating device 10 to a secondary transfer position T2 at which the toner image is finally transferred to the recording paper sheet 6. The paper feed device 50 accommodates and supplies the required recording paper sheet 6 to be transported to the secondary transfer position T2 of the intermediate transfer device 20. The paper sheet transport device 60 transports the recording paper sheet 6 through the secondary transfer position T2 of the intermediate transfer device 20. The fixing device 40 fixes the toner image secondarily transferred by the intermediate transfer device 20 on the recording paper sheet 6.

The plurality of image creating devices 10 and the intermediate transfer device 20 are examples of an image forming unit that forms an image on the recording paper sheet 6 under a predetermined condition. Here, the predetermined condition indicates that an image is formed with a predetermined size at a predetermined position of the recording paper sheet 6 and misregistration or size deviation of the image falls within an allowable range, and an image is formed on the recording paper sheet 6 with predetermined density (including tone) and density deviation falls within an allowable range. In a case where the image formed on the recording paper sheet 6 is a text image or a line image, the predetermined condition only indicates that the image is formed with the predetermined size at the predetermined position of the recording paper sheet 6 and the misregistration or the size deviation falls within the allowable range.

The image creating devices 10 are configured with four image creating devices 10Y, 10M, 10C, and 10K that are dedicated to forming toner images of four colors including yellow (Y), magenta (M), cyan (C), and black (K), respectively. The four image creating devices 10 (Y, M, C, and K) are disposed at required intervals along a periphery of an intermediate transfer belt 21 in an internal space of the apparatus body 3a (see FIG. 1) of the image forming portion 3.

Each image creating device 10 (Y, M, C, and K), as illustrated in FIG. 3, includes a photoreceptor drum 11 that is an example of an image holding unit that rotates. A toner image forming unit described below is generally disposed on a periphery of the photoreceptor drum 11. The toner image forming unit includes a charging device 12, an exposure device 13, a developing device 14, a primary transfer device 15, a drum cleaning device 16, and the like. The charging device 12 charges a peripheral surface (an image holding surface) of the photoreceptor drum 11 on which an image can be formed, to a required potential. The exposure device 13 forms electrostatic latent images with a difference in potential (for each color) by irradiating the charged peripheral surface of the photoreceptor drum 11 with light based on information (a signal) about the image. The developing device 14 forms the toner images by developing the electrostatic latent images with the toner of the developer of corresponding colors (Y, M, C, and K). The primary transfer device 15 transfers each toner image to the intermediate transfer device 20. The drum cleaning device 16 performs cleaning by removing an adhering substance such as the toner that remains adhering to the image holding surface of the photoreceptor drum 11 after primary transfer.

The photoreceptor drum 11 is obtained by forming the image holding surface including a photoconductive layer (a photoreceptive layer) consisting of a photoreceptive material on a peripheral surface of a cylindrical or columnar base material that is processed to be grounded. The photoreceptor drum 11 is supported to rotate in a direction indicated by arrow A by transmitting driving force from a driving device (not illustrated) to the photoreceptor drum 11.

The charging device 12 is configured with a contact type charging roll disposed in a state of being in contact with the photoreceptor drum 11. The charging device 12 is supplied with a charging voltage. In a case where the developing device 14 performs reversal developing, a voltage or a current having the same polarity as a charging polarity of the toner supplied from the developing device 14 is supplied as the charging voltage. A non-contact type charging device such as a scorotron disposed in a non-contact state with the photoreceptor drum 11 may also be used as the charging device 12.

The exposure device 13 consists of an LED printhead that forms the electrostatic latent image configured in accordance with the information on the image input into the image forming apparatus 1 by irradiating the photoreceptor drum 11 with light via LEDs as a plurality of light emitting elements arranged along an axial direction of the photoreceptor drum 11. When the latent image is formed, the information (the signal) on the image input into the image forming apparatus 1 by any unit is transmitted to the exposure device 13. An exposure device that forms the electrostatic latent images by irradiating the peripheral surface of the charged photoreceptor drum 11 with laser light configured in accordance with the information on the image input into the image forming apparatus 1 may be used as the exposure device 13.

Each developing device 14 is configured by disposing a developing roll 141, agitating and transport members 142 and 143, a layer thickness regulating member 144, and the like in a housing 140 in which an opening portion and an accommodating chamber for the developer are formed. The developing roll 141 holds the developer in the housing 140 and transports the developer to a developing region facing the photoreceptor drum 11. The agitating and transport members 142 and 143 consist of a screw auger or the like that transports the developer through the developing roll 141 while agitating the developer. The layer thickness regulating member 144 regulates an amount (a layer thickness) of the developer to be held on the developing roll 141. The developing device 14 is supplied with a developing bias voltage from a power supply device (not illustrated) between the developing roll 141 and the photoreceptor drum 11. The developing roll 141 and the agitating and transport members 142 and 143 rotate in a required direction by transmitting driving force from a driving device (not illustrated) to the developing roll 141 and the agitating and transport members 142 and 143. Two-component developers including non-magnetic toner and a magnetic carrier are used as the above developers of four colors (Y, M, C, and K). The developing device 14 is supplied with toner of corresponding colors from a toner cartridge (not illustrated) at a required timing, and toner density in the housing 140 is adjusted.

The primary transfer device 15 is a contact type transfer device including a primary transfer roll that comes into contact with the peripheral surface of the photoreceptor drum 11 and rotates at a primary transfer position T1 with the intermediate transfer belt 21 interposed between the primary transfer device 15 and the photoreceptor drum 11 and that is supplied with a primary transfer voltage. A direct current voltage having a polarity opposite to the charging polarity of the toner is supplied from a power supply device (not illustrated) as the primary transfer voltage.

The drum cleaning device 16 is configured with a cleaning blade 161 and a cleaning brush 162 disposed in a body 160 having a container shape, a feed member 163, and the like. The cleaning blade 161 and the cleaning brush 162 perform cleaning by removing the adhering substance on the photoreceptor drum 11. The feed member 163 collects the adhering substance such as the toner removed by the cleaning blade 161 and the cleaning brush 162 and transports the adhering substance to be fed to a collection system (not illustrated).

The intermediate transfer device 20, as illustrated in FIG. 3, is disposed to be present below the image creating devices 10 (Y, M, C, and K) along the vertical direction Z. The intermediate transfer device 20 is generally configured with the intermediate transfer belt 21, a plurality of belt support rolls 22 to 27, a secondary transfer device 30, and two belt cleaning devices 28 and 29. The intermediate transfer belt 21 is an example of an intermediate transfer medium that circulates in a direction indicated by arrow B while passing through the primary transfer position T1 between the photoreceptor drum 11 and the primary transfer device 15 (the primary transfer roll). The plurality of belt support rolls 22 to 27 support the intermediate transfer belt 21 such that the intermediate transfer belt 21 is held in a favorable state from an inner periphery of the intermediate transfer belt 21 and can move in circulation. The secondary transfer device 30 is disposed on an outer peripheral surface (the image holding surface) side of the intermediate transfer belt 21 supported by the belt support roll 26 and secondarily transfers the toner image on the intermediate transfer belt 21 to the recording paper sheet 6. The belt cleaning devices 28 and 29 perform cleaning by removing the adhering substance such as the toner, paper dust, or the like that remains adhering to the outer peripheral surface of the intermediate transfer belt 21 after passing through the secondary transfer device 30.

For example, an endless belt made of a material obtained by dispersing a resistance adjusting agent such as carbon black in a synthetic resin such as a polyimide resin or a polyamide resin is used as the intermediate transfer belt 21. The belt support roll 22 is configured as a driving roll and also as a support roll of the belt cleaning device 29. The belt support roll 23 is configured as a leveling roll that holds a traveling position of the intermediate transfer belt 21. The belt support roll 24 is configured as a tension applying roll that applies tension to the intermediate transfer belt 21. The belt support roll 25 is configured as a driven roll that holds the traveling position of the intermediate transfer belt 21. The belt support roll 26 is configured as a backup roll of the secondary transfer device 30. The belt support roll 27 is configured as a support roll of the belt cleaning device 28.

The secondary transfer device 30, as illustrated in FIG. 3, includes a secondary transfer roll 31 that rotates at the secondary transfer position T2 that is an outer peripheral surface part of the intermediate transfer belt 21 supported by the belt support roll 26 in the intermediate transfer device 20. The secondary transfer roll 31 or the belt support roll 26 of the intermediate transfer device 20 is supplied with a direct current voltage having the opposite polarity or the same polarity as the charging polarity of the toner as a secondary transfer voltage.

The fixing device 40 is configured by disposing a heating rotor 401 in a belt form or a roll form and a pressing rotor 402 in a roll form or a belt form that is driven to rotate in contact with the heating rotor 401 at a predetermined pressure in a state of being substantially parallel to an axial direction of the heating rotor 401, in a housing (not illustrated) in which an introduction port and a discharge port of the recording paper sheet 6 are formed. The heating rotor 401 in the belt form is rotatably stretched between a heating member 403 in a pad form or a roll form and stretching rolls 404 and 405 also serving as heating units. In the fixing device 40, a contact portion in which the heating rotor 401 and the pressing rotor 402 are in contact with each other is a fixing processing portion that performs required fixing processing (heating and pressing).

A cooling device (not illustrated) that cools the recording paper sheet 6, a bending correction device 406, and the like may be disposed on a downstream side of the fixing device 40.

The paper feed device 50, as illustrated in FIG. 3, is disposed to be present at a position below the intermediate transfer device 20 in the vertical direction Z. The paper feed device 50 is generally configured with a paper sheet accommodator 51 constituting the plurality of (or single) paper feed trays 3b, 3c, and 3d, and a feed device 52. The paper sheet accommodator 51 accommodates the recording paper sheet 6 having a required size, material, and the like in a state where the recording paper sheet 6 is stacked. The feed device 52 feeds the recording paper sheet 6 one sheet at a time from the paper sheet accommodator 51. The paper feed trays 3b, 3c, and 3d consisting of the paper sheet accommodator 51, as illustrated in FIG. 2, are attached such that the paper feed trays 3b, 3c, and 3d can be pulled out to, for example, a front surface (a side surface that a user faces when performing an operation) side of the apparatus body 3a.

Examples of the recording paper sheet 6 include plain paper used in a copy machine or a printer of an electrophotographic system, thin paper such as tracing paper, and an OHP sheet consisting of a transparent film-shaped medium made of a synthetic resin (PET or the like). In order to further improve smoothness of an image surface after fixing, for example, the front side of the recording paper sheet 6 is as smooth as possible. For example, coated paper obtained by coating a front side of the plain paper with a resin or the like, or so-called thick paper having a relatively large paper weight, such as art paper for printing, can be appropriately used.

While the recording paper sheet 6 may have any size, not only a regular size such as A4 size (210×297 mm) or A3 size (297×420 mm) but also A4 extended size or A3 extended size slightly larger than A4 size or A3 size are used.

The paper sheet transport device 60 broadly includes a first paper feed transport path 61, a second paper feed transport path 62, an intermediate transport path 63, a discharge transport path 64, a reversal transport path 65, a two-sided transport path 66, and the like. The first paper feed transport path 61 is configured with a plurality of (or single) paper sheet transport roll pairs 67 and 68 that transport the recording paper sheet 6 fed from the paper sheet accommodator 51 of the paper feed device 50 to the secondary transfer position T2 of the intermediate transfer device 20, and a transport guide (not illustrated). The second paper feed transport path 62 is configured with a single (or a plurality of) paper sheet transport roll pair 69 that transports the recording paper sheet 6 supplied from the external paper feed portion 2 to join the first paper feed transport path 61, and a transport guide (not illustrated). The intermediate transport path 63 is configured with a transport belt (not illustrated) and the like that transport the recording paper sheet 6 on which the toner image is transferred at the secondary transfer position T2 of the intermediate transfer device 20, to the fixing device 40. The discharge transport path 64 is configured with a single (or a plurality of) discharge roll pair 70 that discharges the recording paper sheet 6 on which the toner image is fixed by the fixing device 40, to the outside of the image forming portion 3, and a transport guide (not illustrated). The reversal transport path 65 is configured with a transport roll pair 71 that transports the recording paper sheet 6 on which the image is formed on one side by switching the transport direction of the recording paper sheet 6 downward, a reversal roll pair 72 that reverses the front and the rear of the recording paper sheet 6, and a transport guide (not illustrated). The two-sided transport path 66 is configured with a plurality of (or single) paper sheet transport roll pairs 73 that transport the recording paper sheet 6 of which the front and the rear are reversed by the reversal transport path 65, to the first paper feed transport path 61 and that transport the recording paper sheet 6 again to the secondary transfer position T2 of the intermediate transfer device 20 via the first paper feed transport path 61, and a transport guide (not illustrated).

### <Configuration of Control Device>

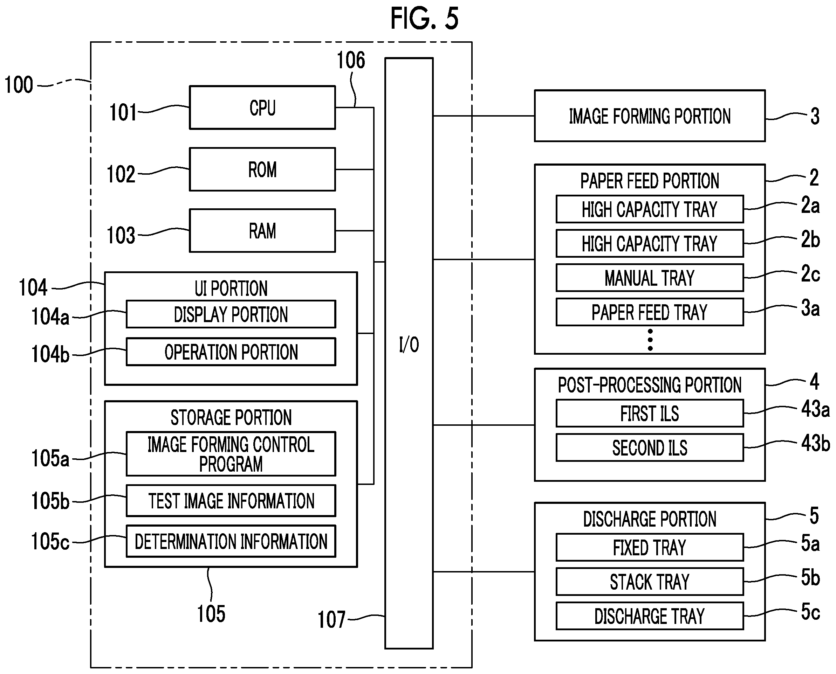

As illustrated in FIG. 1, the image forming apparatus 1 includes a control device 100 configured with a computer and the like. As illustrated in FIG. 5, the control device 100 includes a central processing unit (CPU) 101 as an example of a processor, a read only memory (ROM) 102, a random access memory (RAM) 103, a user interface (UI) portion 104 as an example of a setting unit, a storage portion 105 consisting of a non-volatile memory or the like, and a bus 106 that connects the CPU 101, the ROM 102, and the like, an input/output (I/O) interface 107, and the like.

The CPU 101 controls an operation of the whole image forming apparatus 1 in an integrated manner based on an image forming control program 105a as an example of the image forming program according to the present Exemplary Embodiment 1 stored in the storage portion 105. A part of or the whole image forming control program 105a may be stored in the ROM 102 or the like. In this case, the image forming control program 105a for executing only a part of the image forming control program 105a as a subroutine can be stored in the storage portion 105. The ROM 102 stores an image forming control program related to a basic image forming operation in the image forming control program 105a. The storage portion 105 also stores test image information 105b, determination information 105c, and the like in advance. The test image information 105b is information about the test image formed on the recording paper sheet 6 by the image forming portion 3 of the image forming apparatus 1 at a predetermined timing. The determination information 105c is information including a plurality of predetermined threshold values for determining whether or not the test image formed on the recording paper sheet 6 is appropriate based on the test image information 105b.

The UI portion 104 includes a display portion 104a and an operation portion 104b for the user to operate the image forming apparatus 1. The display portion 104a and the operation portion 104b are configured with a liquid crystal display panel or the like having a touch panel function. The user selects and executes a required function from various functions of the image forming apparatus 1 displayed on the display portion 104a via the operation portion 104b.

The CPU 101 executes a print operation selected by the user via the UI portion 104, by controlling the image forming portion 3, the paper feed portion 2, the post-processing portion 4, and the discharge portion 5 of the image forming apparatus 1 via the input/output (I/O) interface 107 based on the image forming control program 105a.

In Exemplary Embodiment 1, the image forming control program 105a executed by the image forming apparatus 1 may be provided in a state where the image forming control program 105a is stored in a computer readable storage medium such as a magnetic storage medium (a magnetic tape, a magnetic disk (an HDD, a flexible disk (FD), or the like), or the like), an optical storage medium (an optical disk (a compact disk (CD), a digital versatile disk (DVD), or the like)), a magneto-optical storage medium, or a semiconductor memory (a flash ROM or the like). The image forming control program 105a may be downloaded via a network such as the Internet.

### <Basic Operation of Image Forming Apparatus>

Hereinafter, a basic image forming operation of the image forming apparatus 1 will be described.

The image forming apparatus 1 executes a print job of forming the image on the single or the plurality of recording paper sheets 6 in accordance with image information transmitted from a host computer or the like based on instruction information of a request for the image forming operation (print) selected by the user by operating the UI portion 104.

Here, the image forming operation in forming a full color image configured with a combination of toner images of four colors (Y, M, C, and K) using the above four image creating devices 10 (Y, M, C, and K) will be described. The image forming operation in forming an image obtained by combining toner images of a single color or a plurality of colors using any one or more image creating devices 10 among the four image creating devices 10 (Y, M, C, and K) is basically the same.

In a case where the image forming portion 3 of the image forming apparatus 1 receives the instruction information of the request for the image forming operation (print) selected by the user by operating the UI portion 104, the four image creating devices 10 (Y, M, C, and K), the intermediate transfer device 20, the secondary transfer device 30, the fixing device 40, and the like start under control of the control device 100.

As illustrated in FIG. 3, in the image forming portion 3 of the image forming apparatus 1, first, each photoreceptor drum 11 rotates in the direction indicated by arrow A in each image creating device 10 (Y, M, C, and K). Each charging device 12 charges a front surface of each photoreceptor drum 11 to a required polarity (in Exemplary Embodiment 1, a negative polarity) and potential. Next, the exposure device 13 irradiates the charged front surface of the photoreceptor drum 11 with light emitted based on the signal of the image obtained by converting the information about the image input into the image forming apparatus 1 into each color component (Y, M, C, and K), and forms each electrostatic latent image of each color component configured with a required difference in potential on the front surface.

Here, the information about the image input into the image forming apparatus 1 is information about the image with which the user wants to form (print) the image on the recording paper sheet 6. In the image forming apparatus 1 according to Exemplary Embodiment 1, the information about the image includes the test image information 105b stored in the storage portion 105 of the control device 100 in addition to the information about the image with which the user wants to form (print) the image on the recording paper sheet 6.

Next, each developing device 14 performs developing by supplying the toner of the corresponding colors (Y, M, C, and K) charged to the required polarity (the negative polarity) to electrostatically adhere to the electrostatic latent images of each color component formed on the photoreceptor drum 11. Through such developing, the electrostatic latent images of each color component formed on each photoreceptor drum 11 are visualized as the toner images of four colors (Y, M, C, and K) developed with the toner of the corresponding colors, respectively.

Next, in a case where the toner images of each color formed on the photoreceptor drum 11 of each image creating device 10 (Y, M, C, and K) are transported to the primary transfer position T1, the primary transfer device 15 primarily transfers the toner images of each color to the intermediate transfer belt 21 rotating in the direction indicated by arrow B of the intermediate transfer device 20 in a state where the toner images are sequentially superimposed on each other.

In each image creating device 10 (Y, M, C, and K) after the end of the primary transfer, the drum cleaning device 16 cleans the front surface of the photoreceptor drum 11 by scraping to remove the adhering substance. Accordingly, each image creating device 10 (Y, M, C, and K) is in a state where a subsequent image creating operation can be performed.

Next, in the intermediate transfer device 20, as illustrated in FIG. 3, the primarily transferred toner images are held and transported to the secondary transfer position T2 through rotation of the intermediate transfer belt 21. Meanwhile, in the high capacity trays 2a and 2b provided in the paper feed portion 2 of the image forming apparatus 1, the required recording paper sheet 6 is fed to the second paper feed transport path 62 in accordance with the image creating operation. The recording paper sheet 6 fed from the high capacity trays 2a and 2b to the second paper feed transport path 62 is transported to the first paper feed transport path 61 of the image forming portion 3. In the first paper feed transport path 61, the paper sheet transport roll pair 68 as resist rolls supplies the recording paper sheet 6 to the secondary transfer position T2 by feeding the recording paper sheet 6 in accordance with a transfer timing. The recording paper sheet 6 on which the image is formed is not limited to the recording paper sheet 6 supplied from the high capacity trays 2a and 2b and may be the recording paper sheet 6 supplied from the paper feed device 50.

At the secondary transfer position T2, the secondary transfer roll 31 secondarily transfers the toner images on the intermediate transfer belt 21 to the recording paper sheet 6 at once. In the intermediate transfer device 20 after the end of the secondary transfer, the belt cleaning devices 28 and 29 perform cleaning by removing the adhering substance such as the toner remaining on the front surface of the intermediate transfer belt 21 after the secondary transfer.

Next, the recording paper sheet 6 on which the toner images are secondarily transferred is peeled off from the intermediate transfer belt 21 and the secondary transfer roll 31, and then transported to the fixing device 40 along the intermediate transport path 63. In the fixing device 40, the non-fixed toner images are fixed to the recording paper sheet 6 through necessary fixing processing (heating and pressing) by introducing the recording paper sheet 6 after the secondary transfer to pass through the fixing processing portion between the rotating heating rotor 401 and the rotating pressing rotor 402. Cooling processing or the bending correction processing is performed, as necessary, on the recording paper sheet 6 after the end of the fixing. Then, in a case where the image is formed on only one side of the recording paper sheet 6, the recording paper sheet 6 is discharged from the image forming portion 3 to the post-processing portion 4 by the discharge roll pair 70 via the discharge transport path 64.

In a case where the image is formed on two sides of the recording paper sheet 6, the recording paper sheet 6 on which the image is formed on one side is not discharged to the post-processing portion 4, and the transport direction of the recording paper sheet 6 is switched downward to the reversal transport path 65 along the vertical direction Z. The front and the rear of the recording paper sheet 6 transported to the reversal transport path 65 are reversed by the reversal roll pair 72, and then the recording paper sheet 6 is transported to the two-sided transport path 66. The recording paper sheet 6 of which the front and the rear are reversed is transported to the first paper feed transport path 61 again via the two-sided transport path 66, and the toner images are transferred to the rear side of the recording paper sheet 6 at the secondary transfer position T2 of the intermediate transfer device 20. In the recording paper sheet 6 on which the toner images are secondarily transferred, the non-fixed toner images are fixed by the fixing device 40, and the recording paper sheet 6 is discharged from the image forming portion 3 to the post-processing portion 4 by the discharge roll pair 70 via the discharge transport path 64.

Through the above operation, a full color image or the like formed by combining the toner images consisting of four colors (Y, M, C, and K) on one side or two sides of the recording paper sheet 6 is output.

As illustrated in FIG. 2, in the post-processing portion 4, the required post-processing such as the bending correction processing, the inspection (reading) processing of the image, the stack processing, the binding processing, the folding processing, and the perforation processing is performed on the recording paper sheet 6 on which the image is formed on one side or two sides by the image forming portion 3. The recording paper sheet 6 on which the post-processing is performed is discharged to the fixed tray 5a, the stack tray 5b, the booklet tray 5c, and the like of the discharge portion 5.

In the image forming apparatus 1 configured as described above, the image wanted by the user is printed on the designated recording paper sheet 6 in accordance with the print operation selected and designated by the user via the UI portion 104.

As illustrated in FIG. 3, the image forming portion 3 of the image forming apparatus 1 forms the toner images of each color in each image creating device 10 (Y, M, C, and K) of yellow (Y), magenta (M), cyan (C), and black (K). The toner images of each color formed by each image creating device 10 (Y, M, C, and K) are transferred to the recording paper sheet 6 in a superimposed manner on each other on the intermediate transfer belt 21 of the intermediate transfer device 20 and then fixed by the fixing device 40. Accordingly, an image such as a full color image is formed. Here, in the image forming portion 3 of the image forming apparatus 1, the misregistration, the size deviation, or the density deviation (including tone deviation) may occur in the images of each color of yellow (Y), magenta (M), cyan (C), and black (K) that are formed by each image creating device 10 (Y, M, C, and K) and that are superimposed on each other on the intermediate transfer belt 21 of the intermediate transfer device 20.

Then, in the image forming apparatus 1, the misregistration or the size deviation of the image or the density or tone deviation of the image occurs in the image finally formed on the single or the plurality of recording paper sheets 6 in the image forming portion 3, and the image wanted by the user (a target image) may not be printed.

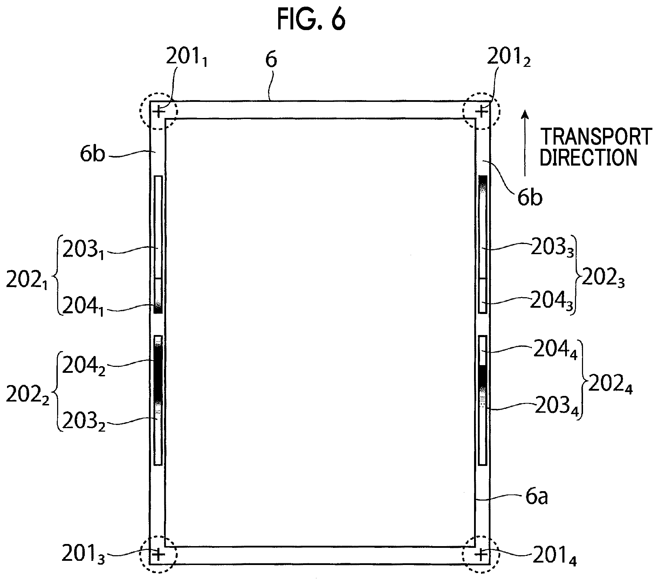

Therefore, in the image forming apparatus 1 according to Exemplary Embodiment 1, as illustrated in FIG. 6, the image forming portion 3 forms a misregistration detection pattern 201 and a density gradation detection pattern 202 at the same time on the recording paper sheet 6 of at least the first page in addition to the image wanted by the user. The misregistration detection pattern 201 and the density gradation detection pattern 202 are examples of the test image formed based on the test image information 105b. Both of the misregistration detection pattern 201 and the density gradation detection pattern 202 do not need to be formed at the same time, and only one of the misregistration detection pattern 201 or the density gradation detection pattern 202 may be formed.

The misregistration detection pattern 201 is an image for detecting the misregistration and the size deviation of the image. The density gradation detection pattern 202 is an image for detecting the density deviation (including the tone deviation) of the image. As illustrated in FIG. 2, in the image forming apparatus 1, the image inspection device 43 of the post-processing portion 4 reads the recording paper sheet 6 on which the misregistration detection pattern 201 and the density gradation detection pattern 202 are formed in the image forming portion 3. The control device 100 detects the misregistration of the image or the density deviation of the image in accordance with a reading result of the image inspection device 43. The control device 100 calculates a misregistration correction amount and a density deviation correction amount for correcting the misregistration of the image and the density deviation of the image. The control device 100 has a real time correction function of correcting a position of the image and a density of the image in the image forming portion 3 in real time in accordance with the misregistration correction amount of the image and the density deviation correction amount of the image. Here, the real time correction is execution of an operation of correcting the position of the image and the density of the image during execution of one print job. A stop operation of temporarily stopping the print job, and the like may be included in the middle of one print job.

The CPU 101 of the control device 100 is an example of a correction unit that, in continuously forming the image on the plurality of recording paper sheets 6 in the image forming portion 3, obtains and corrects a correction amount for correcting an image forming condition in accordance with reading results of images of the misregistration detection pattern 201 and the density gradation detection pattern 202 formed on a specific number (n = an integer of 1 or more) of recording paper sheets 6 immediately after the start, based on the image forming control program 105a stored in the storage portion 105.

### <Configuration of Test Image>

As illustrated in FIG. 6, the test image is broadly configured with the misregistration detection pattern 201 and the density gradation detection pattern 202. For example, the misregistration detection pattern 201 and the density gradation detection pattern 202 are formed in a region other than an original document area 6a in which the image wanted by the user is formed on the recording paper sheet 6. In the illustrated example, the region is a margin part 6b such as upper, lower, right, and left margins positioned on an outer periphery of the original document area 6a.

Here, the original document area 6a is a region having a required size including a standard size such as A4 size (210×297 mm) or A3 size (297×420 mm) for forming the image wanted by the user. In this case, for example, a paper sheet having A4 extended size or A3 extended size slightly larger than the standard size such as A4 size or A3 size is used as the recording paper sheet 6. A size of the recording paper sheet 6 is not limited to a size larger than the standard size and may also be the standard size such as A4 size or A3 size. In this case, the misregistration detection pattern 201 and the density gradation detection pattern 202 formed in the margin part 6b of the recording paper sheet 6 having the standard size are cut and removed in the post-processing portion 4.

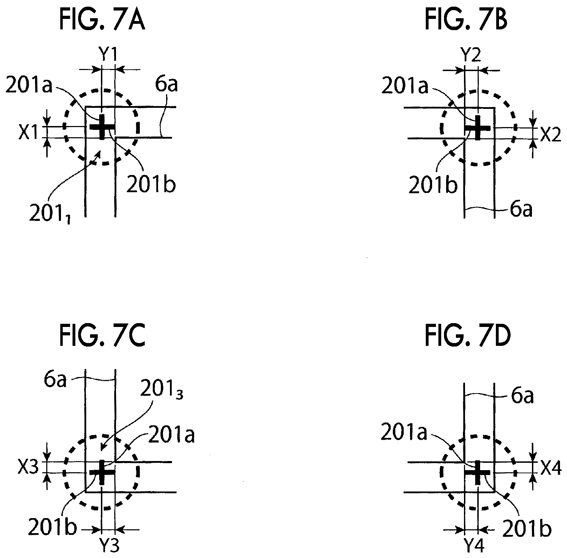

As illustrated in FIG. 6, for example, misregistration detection patterns 201₁ to 201₄ are respectively formed at four corners of the recording paper sheet 6, that is, four corner portions including an upper left portion and an upper right portion along a width direction intersecting with the transport direction of the recording paper sheet 6 and a lower left portion and a lower right portion along the transport direction of the recording paper sheet 6. The misregistration detection patterns 201₁ to 201₄ may have any colors. For example, the misregistration detection patterns 201₁ to 201₄ are formed in black (K). As illustrated in FIGS. 7A to 7D, for example, cross-shaped images consisting of a straight line image 201a along the transport direction of the recording paper sheet 6 and a straight line image 201b along a direction intersecting with the transport direction of the recording paper sheet 6 are used as the misregistration detection patterns 201₁ to 201₄. The straight line image 201a is formed at a position separated from the original document area 6a of the recording paper sheet 6 by predetermined distances (X1, X2, X3, and X4) along the width direction intersecting with the transport direction of the recording paper sheet 6. The straight line image 201b is formed at a position separated from the original document area 6a of the recording paper sheet 6 by predetermined distances (Y1, Y2, Y3, and Y4) along the transport direction of the recording paper sheet 6. For example, all of these distances (X1, X2, X3, and X4) and distances (Y1, Y2, Y3, and Y4) are set to equal values. The misregistration detection patterns 201₁ to 201₄ are not limited to four locations and may be provided at more than four locations, such as six locations or eight locations.

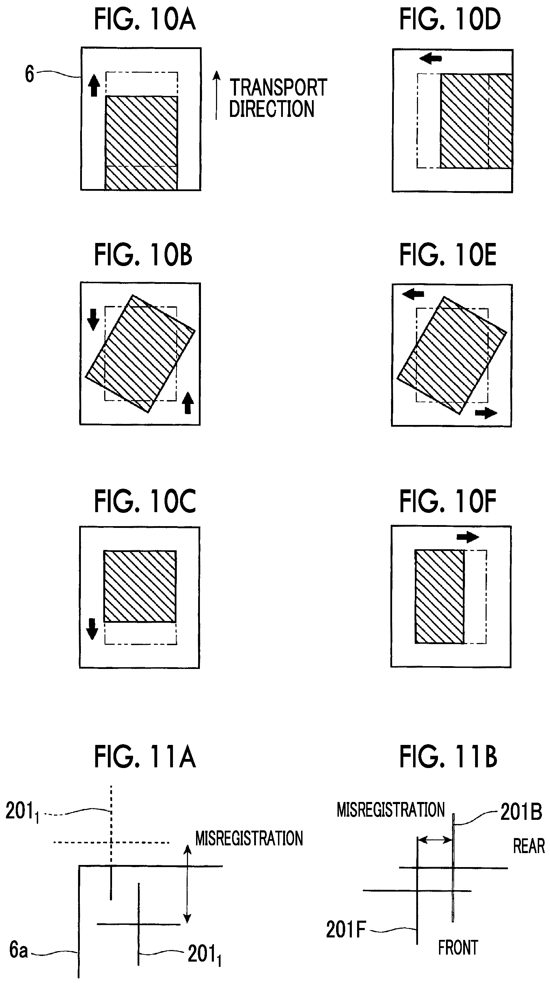

As illustrated in FIGS. 10A to 10F, the misregistration and the size deviation of the image can be classified into lead deviation, lead skew, longitudinal magnification deviation, side deviation, side skew, and lateral magnification deviation. The lead deviation is, as illustrated in FIG. 10A, misregistration in which the image deviates parallel to the transport direction of the recording paper sheet 6. A deviation amount of the lead deviation is given as target value - {(Y2 - Y1)/2}. The lead skew is, as illustrated in FIG. 10B, misregistration in which the image deviates in an inclined manner in a clockwise direction with respect to the transport direction of the recording paper sheet 6. A deviation amount of the lead skew is given as Y2 - Y1. The longitudinal magnification deviation is, as illustrated in FIG. 10C, misregistration in which a position at which the image is formed with respect to the recording paper sheet 6 is correct, but a magnification (a size) of the image deviates along the transport direction of the recording paper sheet 6. A deviation amount of the longitudinal magnification deviation is given as paper sheet size - {(Y2 - Y1)/2} - {(Y4 - Y3)/2}. The side deviation is, as illustrated in FIG. 10D, misregistration in which the image deviates parallel to the direction intersecting with the transport direction of the recording paper sheet 6. A deviation amount of the side deviation is given as target value - {(X2 - X1)/2}. The side skew is, as illustrated in FIG. 10E, misregistration in which the image deviates in an inclined manner along the direction intersecting with the transport direction of the recording paper sheet 6 with respect to the direction intersecting with the transport direction of the recording paper sheet 6. A deviation amount of the side skew is given as X2 - X1. The lateral magnification deviation is, as illustrated in FIG. 10F, misregistration in which the position at which the image is formed with respect to the recording paper sheet 6 is correct, but the magnification (the size) of the image deviates along the direction intersecting with the transport direction of the recording paper sheet 6. A deviation amount of the lateral magnification deviation is given as paper sheet size - {(X2 - X1)/2} - {(X4 - X3)/2}. The misregistration and the size deviation occurring in the image formed on the recording paper sheet 6 consist of a combination of one or more of the lead deviation, the lead skew, the longitudinal magnification deviation, the side deviation, the side skew, and the lateral magnification deviation.

The misregistration of the image includes not only misregistration occurring on one side of the recording paper sheet 6 as illustrated in FIG. 11A but also misregistration occurring between the front side and the rear side of the recording paper sheet 6 as illustrated in FIG. 11B. The misregistration occurring between the front side and the rear side of the recording paper sheet 6 is separately detected as misregistration on the front side of the recording paper sheet 6 and misregistration on the rear side of the recording paper sheet 6 based on the misregistration detection patterns 201₁ to 201₄.

The control device 100 calculates whether or not the lead deviation, the lead skew, the longitudinal magnification deviation, the side deviation, the side skew, and the lateral magnification deviation occur and the deviation amounts of the lead deviation, the lead skew, the longitudinal magnification deviation, the side deviation, the side skew, and the lateral magnification deviation based on positional information (X1, Y1), (X2, Y2), (X3, Y3), and (X4, Y4) of the misregistration detection patterns 201₁ to 201₄ detected by the image inspection device 43 of the post-processing portion 4.

Here, the control device 100 determines whether or not the calculated deviation amount of each of the lead deviation, the lead skew, the longitudinal magnification deviation, the side deviation, the side skew, and the lateral magnification deviation of the image formed on the front side and the rear side of the recording paper sheet 6 falls within a range of a predetermined threshold value (an upper limit value and a lower limit value). The predetermined threshold value (the upper limit value and the lower limit value) of the deviation amount of each of the lead deviation, the lead skew, the longitudinal magnification deviation, the side deviation, the side skew, and the lateral magnification deviation is stored in the storage portion 105 as the determination information 105c.

The control device 100 corrects the misregistration and the size deviation of the image in exposing the image to light on the photoreceptor drum 11 in the exposure device 13 of each image creating device 10 (Y, M, C, and K) of yellow (Y), magenta (M), cyan (C), and black (K) of the image forming portion 3. In exposing the image to light via the exposure device 13 of each image creating device 10 (Y, M, C, and K), the image forming portion 3 loads image data on a memory in page units based on the image information. The misregistration and the size deviation of the image are corrected by correcting a position at which the image data is loaded, in dot units or the like to correct the deviation amounts of the lead deviation, the lead skew, the longitudinal magnification deviation, the side deviation, the side skew, and the lateral magnification deviation in loading the image data on the memory.

As illustrated in FIG. 6, density gradation detection patterns 202₁ to 202₄ include first density gradation detection patterns 203₁ to 203₄ and second density gradation detection patterns 204₁ to 204₄. The first density gradation detection patterns 203₁ to 203₄ are used for detecting the density of the image in each color of yellow (Y), magenta (M), cyan (C), and black (K) alone. The second density gradation detection patterns 204₁ to 204₄ are used for detecting a density of a mixed color image formed by mixing images of two or more predetermined colors among yellow (Y), magenta (M), cyan (C), and black (K). In the illustrated Exemplary Embodiment 1, the first density gradation detection patterns 203₁ to 203₄ and the second density gradation detection patterns 204₁ to 204₄ are continuously formed along the transport direction of the recording paper sheet 6.

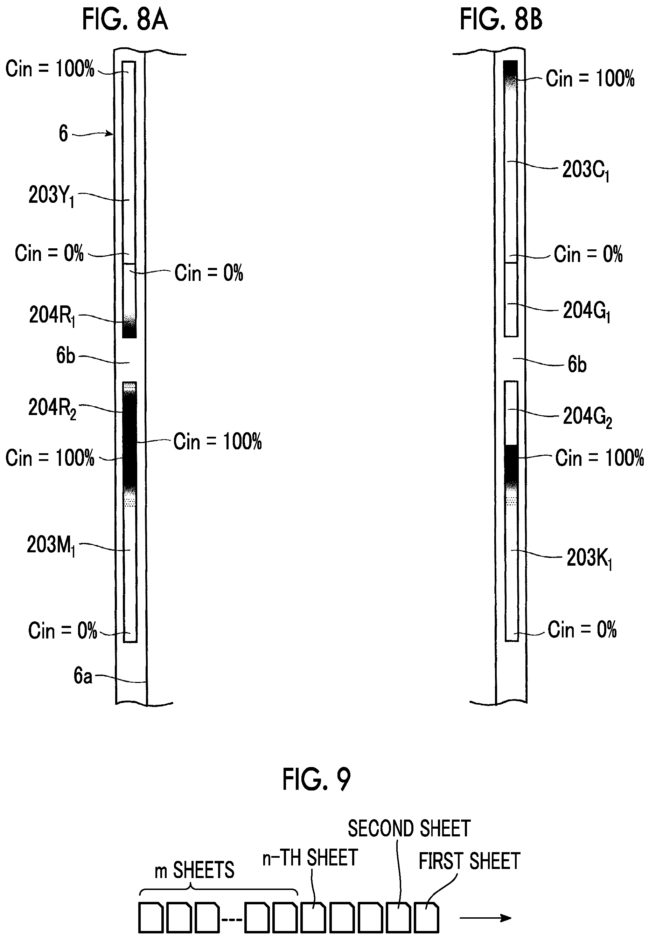

The first density gradation detection patterns 203₁ to 203₄ and the second density gradation detection patterns 204₁ to 204₄ consist of a shade image that is formed in an elongated band shape along the transport direction of the recording paper sheet 6 in both of right and left end portions along the width direction intersecting with the transport direction of the recording paper sheet 6. As a first density gradation detection pattern 203, for example, a first density gradation detection pattern 203Y₁ of yellow (Y) is formed in an upper portion of a margin part provided in the left end portion in the width direction intersecting with the transport direction of the recording paper sheet 6. In the first density gradation detection pattern 203Y₁ of yellow (Y), as illustrated in FIGS. 8A and 8B, a solid image of yellow (Y) color is formed at a plurality of separate levels (for example, 5 levels or 10 levels) such that a lower end portion has a density of zero (Cin = 0%), and an upper end portion has the highest density (Cin = 100%).

In the same manner, as the first density gradation detection pattern 203, a first density gradation detection pattern 203M₁ of magenta (M) is formed in a lower portion of the margin part provided in the left end portion in the width direction intersecting with the transport direction of the recording paper sheet 6. In the first density gradation detection pattern 203M₁ of magenta (M), as illustrated in FIGS. 8A and 8B, a solid image of magenta (M) color is formed at a plurality of separate levels (for example, 5 levels or 10 levels) such that a lower end portion has a density of zero (Cin = 0%), and an upper end portion has the highest density (Cin = 100%).

As the first density gradation detection pattern 203, for example, a first density gradation detection pattern 203C₁ of cyan (C) is formed in an upper portion of a margin part provided in the right end portion in the width direction intersecting with the transport direction of the recording paper sheet 6. In the first density gradation detection pattern 203C₁ of cyan (C), as illustrated in FIGS. 8A and 8B, a solid image of cyan (C) color is formed at a plurality of separate levels (for example, 5 levels or 10 levels) such that a lower end portion has a density of zero (Cin = 0%), and an upper end portion has the highest density (Cin = 100%).

As the first density gradation detection pattern 203, for example, a first density gradation detection pattern 203K₁ of black (K) is formed in a lower portion of the margin part provided in the right end portion in the width direction intersecting with the transport direction of the recording paper sheet 6. **In** the first density gradation detection pattern 203K₁ of black (K), as illustrated in FIGS. 8A and 8B, a solid image of black (K) color is formed at a plurality of separate levels (for example, 5 levels or 10 levels) such that a lower end portion has a density of zero (Cin = 0%), and an upper end portion has the highest density (Cin = 100%).

As illustrated in FIGS. 8A and 8B, a second density gradation detection pattern 204 is divided into a lower end portion of the first density gradation detection pattern 203Y₁ of yellow (Y) along the transport direction of the recording paper sheet 6 and an upper end portion of the first density gradation detection pattern 203M₁ of magenta (M) along the transport direction of the recording paper sheet 6, and a second density gradation detection pattern 204R of red (R) in which yellow (Y) and magenta (M) are mixed is formed. In second density gradation detection patterns 204R₁ and 204R₂ of red (R), as illustrated in FIGS. 8A and 8B, a solid image of red (R) color is formed at a plurality of separate levels (for example, 5 levels or 10 levels) in a state of being divided into upper and lower parts such that the upper end portion has a density of zero (Cin = 0%), and the lower end portion has the highest density (Cin = 100%).

As illustrated in FIGS. 8A and 8B, the second density gradation detection pattern 204 is divided into a lower end portion of the first density gradation detection pattern 203C₁ of cyan (C) along the transport direction of the recording paper sheet 6 and an upper end portion of the first density gradation detection pattern 203K₁ of black (K) along the transport direction of the recording paper sheet 6, and second density gradation detection patterns 204G₁ and 204G₂ of green (G) in which yellow (Y) and cyan (C) are mixed is formed. In the second density gradation detection patterns 204G₁ and 204G₂ of green (G), as illustrated in FIGS. 8A and 8B, a solid image of green (G) color is formed at a plurality of separate levels (for example, 5 levels or 10 levels) in a state of being divided into upper and lower parts such that the upper end portion has a density of zero (Cin = 0%), and the lower end portion has the highest density (Cin = 100%).

Here, the second density gradation detection patterns 204R₁ and 204R₂ of red (R) and the second density gradation detection patterns 204G₁ and 204G₂ of green (G) are described as the second density gradation detection pattern 204 formed on the recording paper sheet 6 of the first page. However, a density gradation detection pattern (not illustrated) of blue (B) in which magenta (M) and cyan (C) formed in the margin parts 6b and 6b positioned in upper and lower portions of the recording paper sheet 6 of the first page or on the recording paper sheet 6 of the second and subsequent pages may be used as the second density gradation detection pattern 204.

As illustrated in FIG. 9, the misregistration detection pattern 201 is basically formed on only the first recording paper sheet 6 immediately after the start of forming of the image among the plurality of recording paper sheets 6 on which the image is continuously formed. However, as the misregistration detection pattern 201, identical or different misregistration detection patterns 201 may be formed on a plurality of recording paper sheets 6 immediately after the start of forming of the image among the plurality of recording paper sheets 6 on which the image is continuously formed.

The density gradation detection pattern 202 is formed on at least the first recording paper sheet 6 immediately after the start of forming of the image among the plurality of recording paper sheets 6 on which the image is continuously formed. However, as the density gradation detection pattern 202, for example, different density gradation detection patterns 202 are formed on a plurality of (n) recording paper sheets 6 immediately after the start of forming of the image among the plurality of recording paper sheets 6 on which the image is continuously formed. Here, n is an integer of 1 or more, as described above.

As illustrated in FIG. 2, the density gradation detection pattern 202 formed on the recording paper sheet 6 together with the image of the original document is read by the first and second ILSs 43a and 43b of the image inspection device 43. Reading data of the first density gradation detection patterns 203₁ to 203₄ and the second density gradation detection patterns 204₁ to 204₄ read by the first and second ILSs 43a and 43b is transmitted to the control device 100 as color data of hue, brightness, and chroma having a predetermined resolution, as illustrated in FIG. 5. In a case where the image of the original document formed on the recording paper sheet 6 is a monochrome image, the reading data of the first density gradation detection patterns 203₁ to 203₄ and the second density gradation detection patterns 204₁ to 204₄ is transmitted to the control device 100 as data of only the brightness.

The control device 100 calculates whether or not gradation deviation occurs in the density of each color of yellow (Y), magenta (M), cyan (C), and black (K) and a mixed color of two or more colors, and a deviation amount of the gradation deviation based on density information of the first density gradation detection patterns 203₁ to 203₄ and the second density gradation detection patterns 204₁ to 204₄ detected by the image inspection device 43 of the post-processing portion 4 as density, chroma, and hue.

In developing the electrostatic latent images formed on the photoreceptor drum 11 in the developing device 14 of each image creating device 10 (Y, M, C, and K) of yellow (Y), magenta (M), cyan (C), and black (K) of the image forming portion 3, the control device 100 corrects a charging potential of the photoreceptor drum 11 in the charging device 12, the developing bias voltage of the developing device 14, toner density, and the like such that the density deviation (including the gradation deviation) of the image falls within a range of the predetermined threshold value.

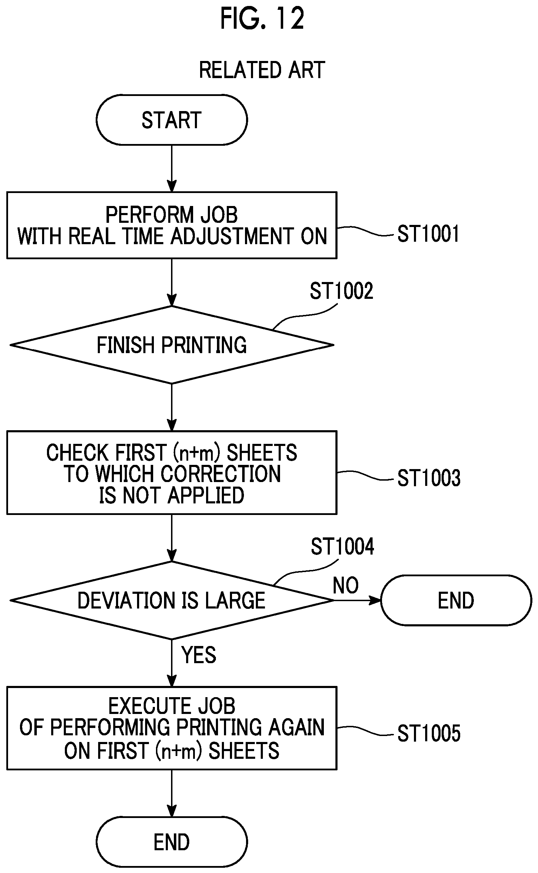

In the image forming apparatus 1 of the related art, as illustrated in FIG. 12, in a case where the real time correction function is selected by the user, a job is performed in a state where the real time correction is ON, in forming a series of images on the plurality of recording paper sheets 6, 6, ... (step S1001).

In the real time correction, as illustrated in FIG. 6, the misregistration detection pattern 201 and the density gradation detection pattern 202 are formed together on at least the recording paper sheet 6 of the first page while forming the image wanted by the user on the recording paper sheet 6.

Here, as illustrated in FIG. 9, in performing the real time correction, the image forming apparatus 1 of the related art forms the misregistration detection pattern 201 and the density gradation detection pattern 202 on the first to n-th recording paper sheets 6 immediately after the start of a series of print jobs. The image forming apparatus 1 reads the misregistration detection pattern 201 and the density gradation detection pattern 202 formed on the first to n-th recording paper sheets 6 via the image inspection device 43 of the post-processing portion 4. However, the control device 100 does not apply the real time correction to not only the first to n-th recording paper sheets 6 but also the recording paper sheet 6 that has already passed through the secondary transfer position T2 of the intermediate transfer device 20 of the image forming portion 3, and the recording paper sheet 6 for which the image creating operation has already started in each image creating device 10 (Y, M, C, and K) of yellow (Y), magenta (M), cyan (C), and black (K), before the image forming condition in each image creating device 10 (Y, M, C, and K) of yellow (Y), magenta (M), cyan (C), and black (K) of the image forming portion 3 is corrected in accordance with the reading results of the misregistration detection pattern 201 and the density gradation detection pattern 202 read by the image inspection device 43.

Thus, in the image forming apparatus 1 of the related art, in a case where the print operation as the series of jobs is finished (step S1002), the user needs to visually check the images formed on the first (n+m) recording paper sheets 6 to which the real time correction is not applied (step S1003). The user determines whether or not the deviation amount of the image is large based on the images formed on the first (n+m) recording paper sheets 6 (step S1004). In a case where the user visually checks the images formed on the first (n+m) recording paper sheets 6 and determines that the deviation amount of the image is not large enough to pose a problem, the user finishes the series of print operations.

Meanwhile, in a case where the user determines that there is at least one recording paper sheet 6 on which the deviation amount of the image or the deviation amount of the density is large enough to pose a problem among the images printed on the first (n+m) recording paper sheets 6, the user sets an operation of performing printing again on the first (n+m) recording paper sheets 6, again via the UI portion 104. The user executes a job of performing printing again on the first (n+m) recording paper sheets 6 (step S1005), and finishes the series of print operations.

In the image forming apparatus 1 of the related art, in a case where the real time correction is performed, the user needs to visually check the images printed on the first (n+m) recording paper sheets 6, 6, ... on which the real time correction is not performed, after the series of print operations are finished.

Here, an operation in which the user visually checks whether or not the misregistration of the image or the density deviation of the image is large enough to pose a problem among the images printed on the first (n+m) recording paper sheets 6, 6, ... on which the real time correction is not performed requires skill and is a very complicated operation.

In a case where the user determines that the misregistration or the density deviation is large enough to pose a problem on at least one recording paper sheet 6, the user needs to set the operation of performing printing again on the first (n+m) recording paper sheets 6, again via the UI portion 104 and perform the job of performing printing again on the first (n+m) recording paper sheets 6.

Thus, the image forming apparatus 1 of the related art poses a technical problem in that an operation load of the user in executing the job of performing printing again is large.

Therefore, the image forming apparatus according to Exemplary Embodiment 1 is configured to form the image such that the recording medium on which the image is formed under the condition corrected by the correction unit is set as the first recording medium, in order to reduce and eliminate the operation load of the user compared to a case where the user forms the image again in executing the so-called real time correction of correcting the image forming condition in accordance with the reading result of the image. Here, the first recording medium means at least the recording medium of the first page.

The image forming apparatus according to Exemplary Embodiment 1 is configured to include a re-execution unit that forms the image again under the condition corrected by the correction unit. Here, for example, the re-execution unit is configured to form the image again without waiting from forming of the image on the specific number of recording media to reflection of the correction made by the correction unit.

That is, as illustrated in FIG. 5, the image forming apparatus 1 according to Exemplary Embodiment 1 includes, in the control device 100, the CPU 101 functioning as the correction unit that corrects the condition in accordance with the reading result of the image formed on the specific number of recording paper sheets 6 immediately after the start of forming of the image in continuously forming the image on the plurality of recording paper sheets 6, 6, .... The CPU 101 functions as a unit that forms the image such that the recording medium on which the image is formed under the condition corrected by the correction unit is set as the first recording medium. The CPU 101 functions as the re-execution unit that forms the image again on at least the recording paper sheet for which the image exceeds the predetermined threshold value under the condition corrected by the correction unit.

In a case where the print operation based on the real time correction is designated in the image forming apparatus 1, the CPU 101 functioning as the correction unit, as illustrated in FIG. 6, executes an operation of printing the image obtained by adding the misregistration detection pattern 201 and the density gradation detection pattern 202 as the test image to the image designated by the user on the specific number n of recording paper sheets 6 immediately after the start of forming of the image among the plurality of continuous recording paper sheets.

In a case where the print operation based on the real time correction is designated in the image forming apparatus 1, the CPU 101 executes the operation of printing the image obtained by adding the test image to the image designated by the user on the specific number n of recording paper sheets immediately after the start of forming of the image among the plurality of continuous recording paper sheets.

In executing the real time correction operation, the CPU 101 automatically performs an operation of forming a corrected image on the (n+m)-th and subsequent recording paper sheets 6 and forming the corrected image on the first to (n+m)-th recording paper sheets 6 in accordance with the reading result of the test image formed on the specific number n of recording paper sheets immediately after the start of forming of the image.

In the image forming apparatus 1 according to Exemplary Embodiment 1, the UI portion 104 has a function of setting at least one of a setting of the specific number (n and m), whether or not to perform re-execution via the re-execution unit, or whether or not an operation of forming the image on the plurality of recording media is available.

The CPU 101 is configured to obtain a plurality of conditions such as the misregistration of the image and the density deviation of the image as the image forming condition and, in a case where the number of recording paper sheets 6 necessary for obtaining the plurality of conditions varies, adopt a larger value of the number of necessary recording paper sheets 6 as the specific number. For example, in a case where the number of recording paper sheets 6 necessary for reading the misregistration of the image is 1, and the number of recording paper sheets 6 necessary for reading the density deviation of the image is 5, the CPU 101 is configured to adopt "5" as the value of the specific number n. In this case, the misregistration detection pattern 201 may be formed on only the first recording paper sheet 6, and the misregistration detection pattern 201 may not be formed on the second and subsequent recording paper sheets 6. Alternatively, different misregistration detection patterns 201 may be formed on the second and subsequent recording paper sheets 6.

### <Operation of Characteristic Part of Image Forming Apparatus>

In the image forming apparatus according to Exemplary Embodiment 1, the following is performed to reduce or eliminate the operation load of the user compared to a case where the user forms the image again in executing the so-called real time correction of correcting the image forming condition in accordance with the reading result of the image.

That is, in the image forming apparatus 1 according to Exemplary Embodiment 1, in a case where the user executes a series of printing processing, as illustrated in FIG. 5, the user sets a print job that the user wants, such as the size and the material of the recording paper sheet 6 for forming the image, the number of printed sheets, or content of the post-processing executed by the post-processing portion 4, by operating the operation portion 104b while viewing a screen displayed on the display portion 104a of the UI portion 104.

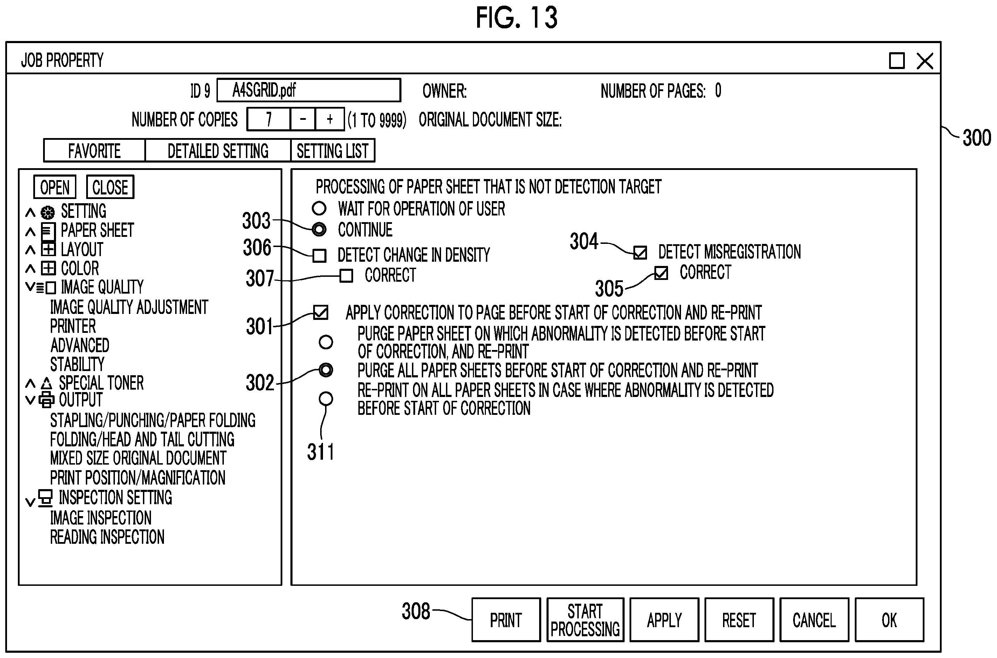

Here, as illustrated in FIG. 13, the user touches a function "apply correction to page before start of correction and re-print" on a screen 300 of a job property displayed on the display portion 104a of the UI portion 104 to check a display portion 301 of the function and select the function. Here, in the function "apply correction to page before start of correction and re-print", in a case where a function "purge all paper sheets before start of correction and re-print" is touched, a display portion 302 of the function is displayed with a double circle and is selected at the same time.

In the illustrated Exemplary Embodiment 1, as illustrated in FIG. 13, in a function of selecting "processing of paper sheet that is not detection target", in a case where a function "continue" is touched, a display portion 303 of the function is displayed with a double circle and is selected at the same time. That is, in the "processing of paper sheet that is not detection target", after an operation of printing the image on the first to (n+m)-th recording paper sheets 6 is executed in the series of print jobs, the CPU 101 determines whether or not the misregistration (including the size deviation) or the density deviation (including the tone deviation) exceeds the predetermined threshold value on at least one recording paper sheet 6 in accordance with the reading results of the misregistration detection pattern 201 and/or the density gradation detection pattern 202 formed on the first to n-th recording paper sheets 6. In a case where the CPU 101 determines that the misregistration (including the size deviation) or the density deviation (including the tone deviation) exceeds the predetermined threshold value on at least one recording paper sheet 6, the CPU 101 continues executing an operation of printing the image on the (n+m+1)-th and subsequent recording paper sheets 6 as the function "continue" after executing an operation of printing the image again by performing correction on the first to (n+m)-th recording paper sheets 6.

In the illustrated Exemplary Embodiment 1, as illustrated in FIG. 13, only a display portion 304 of a function "detect misregistration" and a display portion 305 of a function "correct" are selected and checked by the user. Meanwhile, a display portion 306 of a function "detect change in density" and a display portion 307 of a function "correct" are not selected and checked by the user.

In a case where a print button 308 is operated on the operation portion 104b of the UI portion 104, the image forming apparatus 1 starts the series of print operations.

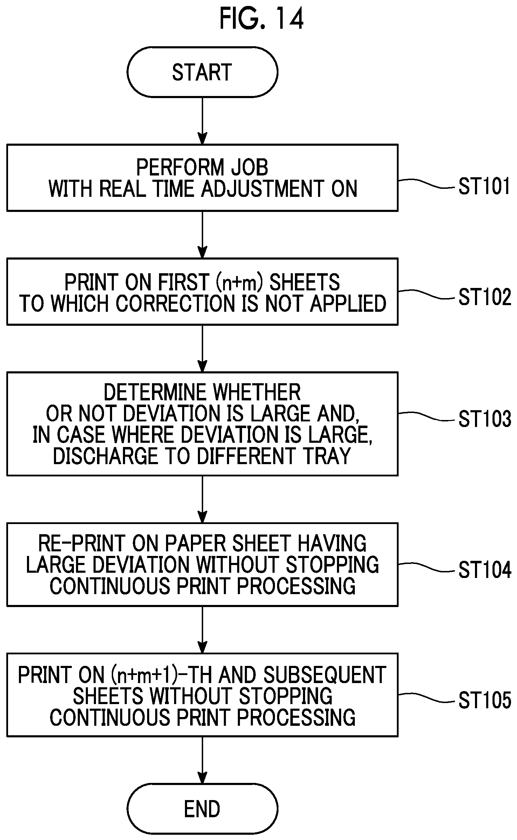

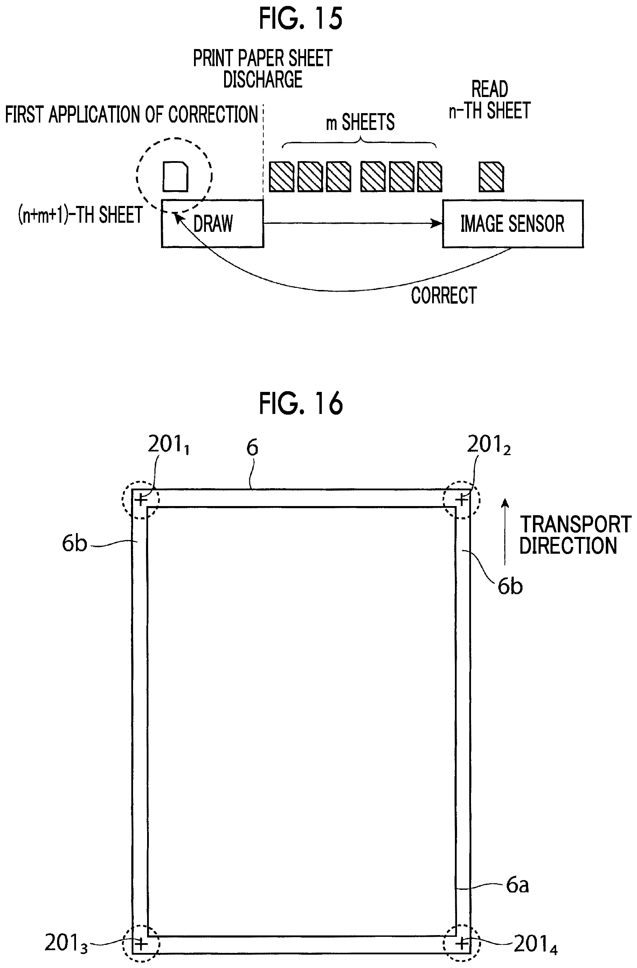

In the image forming apparatus 1 according to Exemplary Embodiment 1, as illustrated in FIG. 14, in forming the series of images on the plurality of recording paper sheets 6, 6, ..., the CPU 101 executes the job in a state where the real time correction is ON (step S101). Here, only the function "detect misregistration" is selected, and only the misregistration detection pattern 201 is formed on the recording paper sheet 6 of the first page, as illustrated in FIG. 16.

As illustrated in FIG. 14, the CPU 101 performs printing on the first (n+m) recording paper sheets 6 from the first sheet to which the real time correction is not applied (step S102).

As illustrated in FIG. 2, the misregistration detection pattern 201 formed on the first n recording paper sheets 6 in the image forming portion 3 of the image forming apparatus 1 is read by the image inspection device 43 of the post-processing portion 4. As illustrated in FIG. 5, information about the misregistration detection pattern 201 of the recording paper sheet 6 read by the first and second ILSs 43a and 43b of the image inspection device 43 is transmitted to the CPU 101.

The CPU 101, in accordance with the image forming control program 105a, determines whether or not the misregistration is large in accordance with positional information of the misregistration detection pattern 201 of the recording paper sheet 6 read by the first and second ILSs 43a and 43b and, in a case where the misregistration is large, discharges the recording paper sheet 6 to a different tray (step S103).

In a case where the CPU 101 determines that a misregistration amount of at least one recording paper sheet 6 exceeds the predetermined threshold value among the first (n+m) recording paper sheets 6, the CPU 101 discharges all of the first (n+m) recording paper sheets 6 to a tray different from a tray for discharging a normal printed matter.

Here, as illustrated in FIG. 2, the stack tray 5b in the post-processing portion 4 is the tray for discharging the normal printed matter, and the fixed tray 5a is a so-called purge tray for discharging all of the first (n+m) recording paper sheets 6 for which the misregistration amount exceeds the predetermined threshold value on at least one recording paper sheet 6.

After printing is executed on the first (n+m) recording paper sheets 6 to which the real time correction is not applied, the CPU 101 executes printing again on the first (n+m) recording paper sheets 6 including the recording paper sheet 6 having large misregistration without stopping the continuous print processing, by applying the correction amount of the misregistration obtained in accordance with the positional information of the misregistration detection pattern 201 (step S104).

The image formed on the first n recording paper sheets 6 among the first (n+m) recording paper sheets 6 on which the print operation is executed again may be configured to be different from the image at the start of forming of the image. In this case, for example, only the image that is wanted by the user and that does not include the misregistration detection pattern 201 or the density gradation detection pattern 202, or the misregistration detection pattern 201 or the density gradation detection pattern 202 different from the misregistration detection pattern 201 or the density gradation detection pattern 202 formed for the first time can be formed in the image formed on the first n recording paper sheets 6. Accordingly, in a case where only the image that is wanted by the user and that does not include the misregistration detection pattern 201 or the density gradation detection pattern 202 is formed, consumption of the toner can be reduced.

The image is printed such that at least the recording paper sheet 6 of the first page on which the image is formed under the condition corrected by the CPU 101 is set as the first recording paper sheet 6, and the first recording paper sheet 6 is discharged to the stack tray 5b that is the normal discharge tray.

After the CPU 101 executes printing again on the first (n+m) recording paper sheets 6 including the recording paper sheet having large misregistration, the CPU 101 continues executing printing on the (n+m+1)-th and subsequent recording paper sheets 6, 6, ... without stopping the continuous print processing (step S105) and finishes the series of print processing.

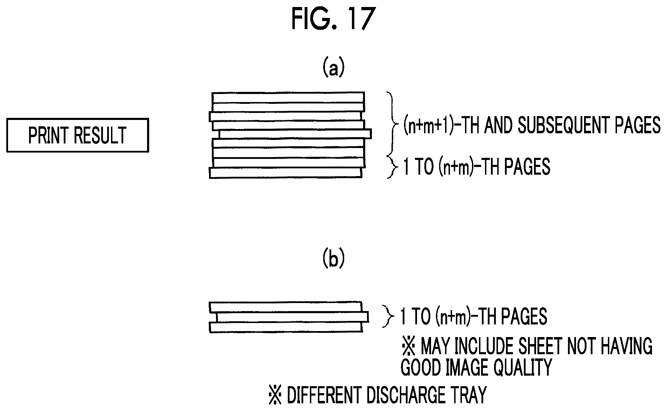

Accordingly, as illustrated in a part (a) in FIG. 17, in the stack tray 5b of the post-processing portion 4 that is the normal discharge tray, the recording paper sheets 6 of (n+m+1) pages or more are automatically discharged in addition to the recording paper sheets 6 of the first page to the (n+m)-th page on which correction is performed.

Meanwhile, as illustrated in a part (b) in FIG. 17, the recording paper sheets 6 of the first page to the (n+m)-th page including an image not having good image quality are discharged to the fixed tray 5a of the post-processing portion 4 as the purge tray.

In the above image forming apparatus 1 according to Exemplary Embodiment 1, the operation of performing printing by performing the real time correction on the recording paper sheets 6 of the (n+m+1)-th and subsequent pages on which the corrected image is formed, in accordance with the reading result of the misregistration detection pattern 201 formed on n recording paper sheets 6 can be executed. In addition, in a case where the recording paper sheet 6 for which the misregistration exceeds the predetermined threshold value is determined to be present among the recording paper sheets 6 of the first page to the (n+m)-th page, the operation of performing printing again by performing correction on the recording paper sheets 6 of the first page to the (n+m)-th page can be automatically performed. Accordingly, the series of print jobs on which the real time correction is performed are executed by causing the user to simply touch the function "apply correction to page before start of correction and re-print" or the like on the screen 300 of the job property displayed on the display portion 104a of the UI portion 104 to select the function.

Thus, the image forming apparatus 1 according to Exemplary Embodiment 1 can reduce or eliminate the operation load of the user compared to a case where the user forms the image again in executing the so-called real time correction of correcting the image forming condition in accordance with the reading result of the image.

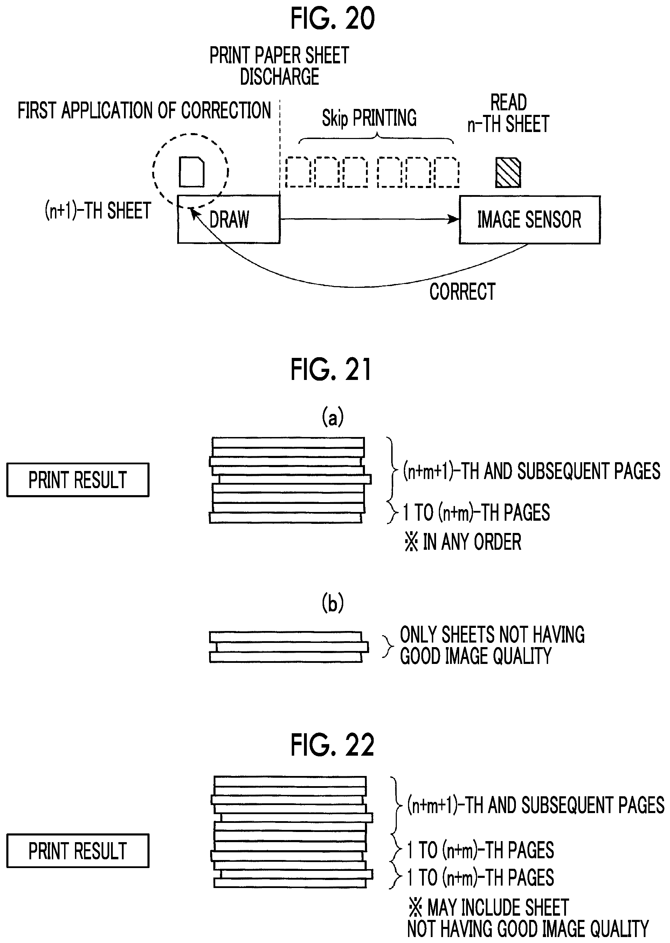

In the image forming apparatus 1 according to Exemplary Embodiment 1, as illustrated in FIG. 13, a case where a function "purge paper sheet on which abnormality is detected before start of correction, and re-print" is selected in the function "apply correction to page before start of correction and re-print" is described. However, in the image forming apparatus 1 according to Exemplary Embodiment 1, a function 311 "re-print on all paper sheets in case where abnormality is detected before start of correction" in the function "apply correction to page before start of correction and re-print" can also be selected. In this case, as illustrated in FIG. 22, the recording paper sheets 6 of the first page to the (n+m)-th page not having good image quality, the recording paper sheets 6 of the first page to the (n+m)-th page on which correction is performed, and the recording paper sheet 6 of the (n+m+1)-th page are sequentially discharged to the stack tray 5b that is the normal discharge tray.

### <Exemplary Embodiment 2>

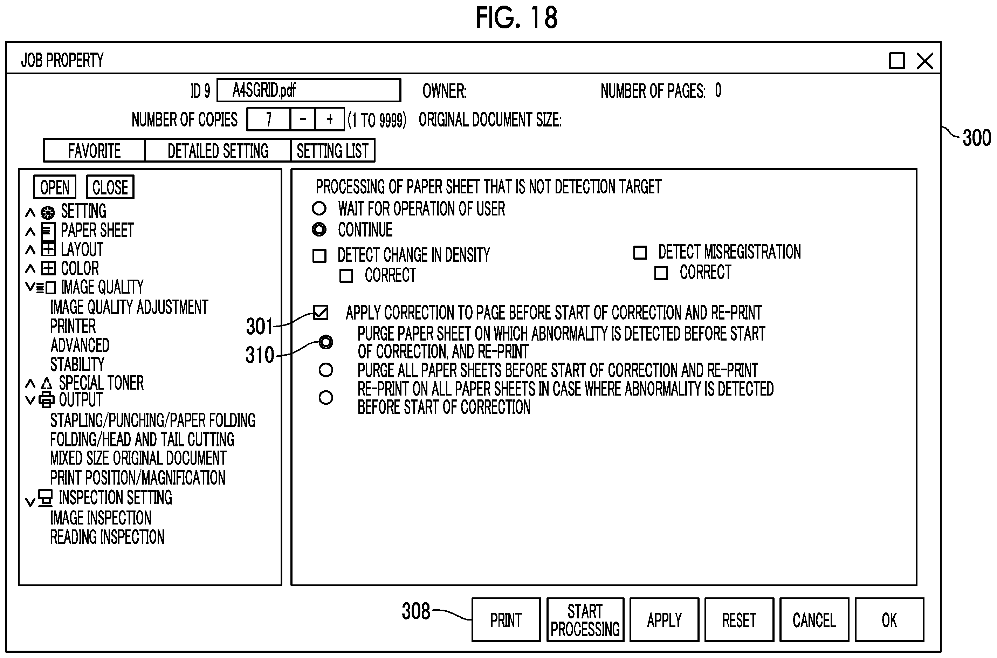

FIG. 18 is a descriptive diagram illustrating the UI portion 104 of an image forming apparatus to which an image forming program and an image forming system according to Exemplary Embodiment 2 are applied.

The image forming apparatus according to Exemplary Embodiment 2 is configured to temporarily stop the image forming operation until the correction made by the correction unit is reflected on the image in the real time correction operation.

In the image forming apparatus according to Exemplary Embodiment 2, the re-execution unit is configured to form the image again on only the recording medium for which the reading result of the image exceeds the predetermined threshold value among the specific number of recording media.

That is, in the image forming apparatus 1 according to Exemplary Embodiment 2, in a case where the user executes the series of printing processing, as illustrated in FIG. 5, the user sets the print job that the user wants, such as the size and the material of the recording paper sheet 6 for forming the image, the number of printed sheets, or the content of the post-processing executed by the post-processing portion 4, by operating the operation portion 104b while viewing the screen displayed on the display portion 104a of the UI portion 104.

Here, as illustrated in FIG. 18, the user touches the function "apply correction to page before start of correction and re-print" on the screen of the job property displayed on the display portion 104a of the UI portion 104 to check the display portion 301 of the function and select the function. Here, in the function "apply correction to page before start of correction and re-print", in a case where the function "purge paper sheet on which abnormality is detected before start of correction, and re-print" is touched, a display portion 310 of the function is displayed with a double circle and is selected at the same time.

Here, in the function "purge paper sheet on which abnormality is detected before start of correction, and re-print", as illustrated in FIG. 20, the image forming portion 3 temporarily stops the print operation of the image on the (n+1)-th recording paper sheet 6 and waits. That is, the image forming portion 3 is configured to temporarily stop the print operation on the (n+1)-th recording paper sheet 6 and wait until the n-th recording paper sheet 6 on which the image is formed is read by the first and second ILSs 43a and 43b of the image inspection device 43, and the CPU 101 determines whether or not the reading result of the misregistration detection pattern 201 exceeds the predetermined threshold value.

That is, in a case where the print button 308 is operated on the operation portion 104b of the UI portion 104, the image forming apparatus 1 according to Exemplary Embodiment 2 starts the series of print operations.

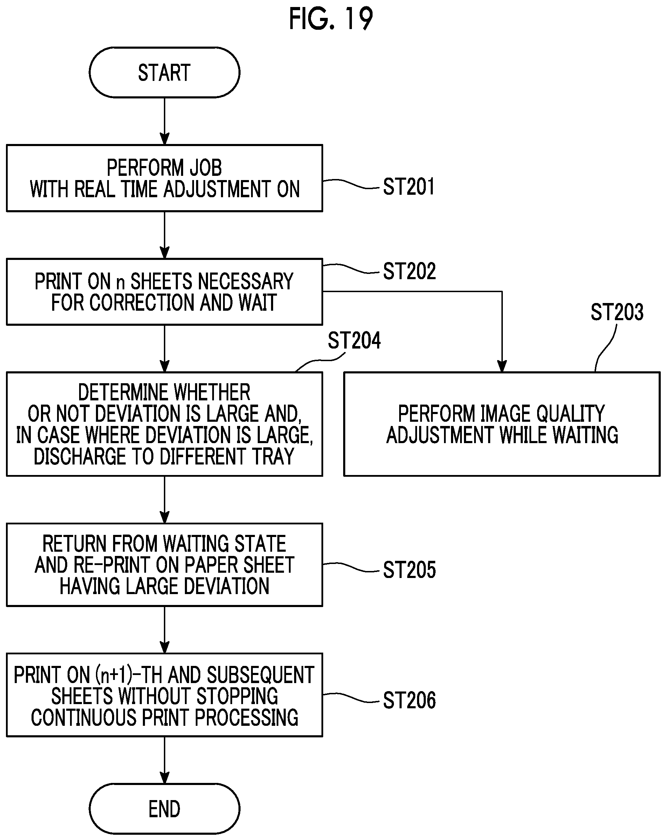

In the image forming apparatus 1 according to Exemplary Embodiment 2, as illustrated in FIG. 19, in forming the series of images on the plurality of recording paper sheets 6, 6, ..., the CPU 101 executes the job in a state where the real time correction is ON (step S201).

The CPU 101 executes printing on n recording paper sheets 6 necessary for the real time correction, and temporarily stops the print operation and waits (step S202).

Here, the image forming portion 3 reads the n-th recording paper sheet 6 on which the image is formed, via the first and second ILSs 43a and 43b of the image inspection device 43. The CPU 101 determines whether or not the reading result of the misregistration detection pattern 201 exceeds the predetermined threshold value, and discharges only the recording paper sheet 6 for which the reading result of the misregistration detection pattern 201 is determined to exceed the predetermined threshold value, to the fixed tray 5a that is the purge tray as the different tray (step S204).

Meanwhile, the CPU 101 performs image quality adjustment while waiting (step S203). Here, the image quality adjustment operation performed while waiting includes an adjustment operation based on the reading result of the misregistration detection pattern 201.

However, in Exemplary Embodiment 2, the image quality adjustment operation performed by the CPU 101 while waiting is not limited to the adjustment operation based on the reading result of the misregistration detection pattern 201. That is, in addition to the adjustment operation based on the reading result of the misregistration detection pattern 201, the CPU 101, as the image quality adjustment operation performed while waiting, for example, forms the density gradation detection pattern 202 illustrated in FIG. 6 on the front surface of the intermediate transfer belt 21 and reads the density gradation detection pattern 202 formed on the front surface of the intermediate transfer belt 21 via an in line sensor (ILS) (not illustrated) disposed on the upstream side of the secondary transfer position T2, in which an operation of forming the image on the recording paper sheet 6 is not included. The CPU 101 performs an operation of adjusting the image density in each image creating device 10 (Y, M, C, and K) of yellow (Y), magenta (M), cyan (C), and black (K) in accordance with the reading result of the density gradation detection pattern 202.

Then, the CPU 101 returns from the waiting state and executes reprinting on the recording paper sheet having large misregistration based on the reading result of the misregistration detection pattern 201 (step S205).

Next, the CPU 101 performs printing on the (n+1)-th and subsequent recording paper sheets 6 while executing the necessary correction operation, without stopping the continuous print operation (step S206) and finishes the processing.

Accordingly, as illustrated in a part (a) in FIG. 21, in the stack tray 5b of the post-processing portion 4 that is the normal discharge tray, the recording paper sheets 6 of (n+m+1) pages or more are automatically discharged in addition to the recording paper sheets 6 of the first page to the (n+m)-th page, in any order, on which correction is performed.

Meanwhile, as illustrated in a part (b) in FIG. 21, only the recording paper sheet 6 including the image not having good image quality is discharged to the fixed tray 5a of the post-processing portion 4 as the purge tray.

The image forming apparatus 1 according to Exemplary Embodiment 2 can reduce or eliminate the operation load of the user compared to a case where the user forms the image again in executing the so-called real time correction of correcting the image forming condition in accordance with the reading result of the image.

In the image forming apparatus 1 according to Exemplary Embodiment 2, since the print operation for the recording paper sheet 6 is executed again on only the recording paper sheet 6 determined as not having good image quality, occurrence of useless recording paper sheets 6 (waste paper) can be reduced.

Other configurations and actions are the same as Exemplary Embodiment 1 and thus, will not be described.

While the exemplary embodiments describe the color image forming apparatus including four image creating devices 10Y, 10M, 10C, and 10K of yellow (Y), magenta (M), cyan (C), and black (K) as the image forming apparatus, the invention is not limited to the exemplary embodiments and can also be applied to a monochrome image forming apparatus including only an image creating device of black (K) as the image forming apparatus.

While the exemplary embodiments illustratively describe the electrophotographic image forming apparatus, the present invention may be applied to an image forming apparatus of a system other than the electrophotographic system. For example, the invention may be applied to an image forming apparatus of an ink jet system.

While the exemplary embodiments describe processing performed by executing a program stored in a storage portion, the invention is not limited to the exemplary embodiments, and the processing of the program may be implemented by hardware.

### (Supplementary Note)

(((1))) An image forming apparatus comprising:
   an image forming unit that forms an image on a recording medium under a predetermined condition; and
   a correction unit that, in continuously forming the image on a plurality of recording media, corrects the condition in accordance with a reading result of the image formed on a specific number of recording media immediately after a start of forming of the image,
   wherein the image is formed such that the recording medium on which the image is formed under the condition corrected by the correction unit is set as a first recording medium.
(((2))) An image forming apparatus comprising:
   an image forming unit that forms an image on a recording medium under a predetermined condition;
   a correction unit that, in continuously forming the image on a plurality of recording media, corrects the condition in accordance with a reading result of the image formed on a specific number of recording media immediately after a start of forming of the image; and
   a re-execution unit that forms the image again under the condition corrected by the correction unit,
   wherein an image forming operation is stopped until correction made by the correction unit is reflected on the image.
(((3))) The image forming apparatus according to (((2))),
   wherein the re-execution unit forms the image again for only the recording medium for which the reading result of the image exceeds a predetermined threshold value among the specific number of recording media.
(((4))) The image forming apparatus according to (((2))),
   wherein the re-execution unit forms the image again without waiting from forming of the image on the specific number of recording media to reflection of the correction made by the correction unit on the image.
(((5))) The image forming apparatus according to (((4))),
   wherein the re-execution unit executes forming of the image again for all recording media on which the image is formed before the correction made by the correction unit is reflected on the image, in addition to the specific number of recording media.
(((6))) The image forming apparatus according to (((2))),
   wherein the correction unit executes a correction operation between an end of a reading operation of the image and forming of the image again via the re-execution unit.
(((7))) The image forming apparatus according to (((6))),
   wherein the correction operation executed by the correction unit is a correction operation not causing forming and reading of the image on the recording medium.
(((8))) The image forming apparatus according to (((2))),
   wherein the re-execution unit changes a part of the image in executing an operation of forming the image again.
(((9))) The image forming apparatus according to (((8))),
   wherein the image includes a correction image for obtaining a correction amount of the condition in addition to a request image requested by a user, and
   the re-execution unit changes the image to the image excluding the correction image.
(((10))) The image forming apparatus according to (((1))), further comprising:
   a spare discharge portion that discharges at least the recording medium for which the reading result of the image exceeds a predetermined threshold value among the specific number of recording media.
(((11))) The image forming apparatus according to (((2))), further comprising:
   a setting unit that sets at least one of a setting of the specific number, whether or not to perform re-execution via the re-execution unit, or whether or not an operation of forming the image on the plurality of recording media is available.
(((12))) The image forming apparatus according to (((1))),
   wherein the correction unit obtains a plurality of conditions as the condition and, in a case where the number of recording media necessary for obtaining the plurality of conditions varies, adopts a larger value of the number of necessary recording media as the specific number.
(((13))) An image forming program causing a computer to function as each portion of the image forming apparatus according to any one of (((1))) to (((12))).
(((14))) An image forming system comprising:
   an image forming unit that forms an image on a recording medium under a predetermined condition;
   a correction unit that, in continuously forming the image on a plurality of recording media, corrects the condition in accordance with a reading result of the image formed on a specific number of recording media immediately after a start of forming of the image; and
   a processor configured to form the image such that the recording medium on which the image is formed under the condition corrected by the correction unit is set as a first recording medium.

According to the image forming apparatus according to (((1))) and (((2))), an operation load of a user can be reduced and eliminated compared to a case where the user forms an image again in executing so-called real time correction of correcting an image forming condition in accordance with a reading result of the image.

According to the image forming apparatus according to (((2))), the number of useless recording media (waste paper) generated can be reduced to a small number compared to a case where the image forming operation continues without stopping until the correction made by the correction unit is reflected on the image.

According to the image forming apparatus according to (((3))), the number of useless recording media (waste paper) generated can be reduced to a small number compared to a case where the re-execution unit forms the image again for all recording media.

According to the image forming apparatus according to (((4))), an effect of a change in a temperature or the like of the image forming unit on the image during a waiting time can be reduced compared to a case where the re-execution unit waits until the correction made by the correction unit is reflected on the image.

According to the image forming apparatus according to (((5))), the re-execution unit easily determines whether or not to execute forming of the image on the recording medium again.

According to the image forming apparatus according to (((6))), correction accuracy of the image can be improved compared to a case where the correction unit does not execute the correction operation between the end of the reading operation of the image and forming of the image again via the re-execution unit.

According to the image forming apparatus according to (((7))), a delay in forming the image caused by performing the correction operation again can be avoided compared to a case where the correction operation executed by the correction unit is a correction operation causing forming and reading of the image on the recording medium.

According to the image forming apparatus according to (((8))), consumption of a developer or the like can be reduced compared to a case where the re-execution unit does not change a part of the image in executing the operation of forming the image again.

According to the image forming apparatus according to (((9))), consumption of the developer or the like can be reduced compared to a case where the re-execution unit forms the correction image again.

According to the image forming apparatus according to (((10))), the recording medium on which the image is formed by the re-execution unit can be easily determined compared to a case where all recording media are discharged to an identical discharge portion.

According to the image forming apparatus according to (((11))), various needs of a user can be fulfilled compared to a case where the image forming apparatus does not include the setting unit that sets at least one of the setting of the specific number, whether or not to perform re-execution via the re-execution unit, or whether or not the operation of forming the image on the plurality of recording media is available.

According to the image forming apparatus according to (((12))), the correction unit can securely execute the correction operation.

According to the image forming program according to (((13))), a version update and the like can be supported compared to a case where all of each portion of the image forming apparatus are configured with hardware.

According to the image forming system according to (((14))), the operation load of the user can be reduced and eliminated compared to a case where the user forms the image again in executing the so-called real time correction of correcting the image forming condition in accordance with the reading result of the image.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: image forming apparatus
2: paper feed portion
3: image forming portion
4: post-processing portion
5: discharge portion
6: recording paper sheet
10: image creating device
43: image inspection device
100: control device
101: CPU
104: UI portion
105: storage portion
105a: image forming control program

## Claims

1. An image forming apparatus comprising:
an image forming unit that forms an image on a recording medium under a predetermined condition; and
a correction unit that, in continuously forming the image on a plurality of recording media, corrects the condition in accordance with a reading result of the image formed on a specific number of recording media immediately after a start of forming of the image,
wherein the image is formed such that the recording medium on which the image is formed under the condition corrected by the correction unit is set as a first recording medium.

2. An image forming apparatus comprising:
an image forming unit that forms an image on a recording medium under a predetermined condition;
a correction unit that, in continuously forming the image on a plurality of recording media, corrects the condition in accordance with a reading result of the image formed on a specific number of recording media immediately after a start of forming of the image; and
a re-execution unit that forms the image again under the condition corrected by the correction unit,
wherein an image forming operation is stopped until correction made by the correction unit is reflected on the image.

3. The image forming apparatus according to claim 2,
wherein the re-execution unit forms the image again for only the recording medium for which the reading result of the image exceeds a predetermined threshold value among the specific number of recording media.

4. The image forming apparatus according to claim 2,
wherein the re-execution unit forms the image again without waiting from forming of the image on the specific number of recording media to reflection of the correction made by the correction unit on the image.

5. The image forming apparatus according to claim 4,
wherein the re-execution unit executes forming of the image again for all recording media on which the image is formed before the correction made by the correction unit is reflected on the image, in addition to the specific number of recording media.

6. The image forming apparatus according to claim 2,
wherein the correction unit executes a correction operation between an end of a reading operation of the image and forming of the image again via the re-execution unit.

7. The image forming apparatus according to claim 6,
wherein the correction operation executed by the correction unit is a correction operation not causing forming and reading of the image on the recording medium.

8. The image forming apparatus according to claim 2,
wherein the re-execution unit changes a part of the image in executing an operation of forming the image again.

9. The image forming apparatus according to claim 8,
wherein the image includes a correction image for obtaining a correction amount of the condition in addition to a request image requested by a user, and
the re-execution unit changes the image to the image excluding the correction image.

10. The image forming apparatus according to claim 1, further comprising:
a spare discharge portion that discharges at least the recording medium for which the reading result of the image exceeds a predetermined threshold value among the specific number of recording media.

11. The image forming apparatus according to claim 2, further comprising:
a setting unit that sets at least one of a setting of the specific number, whether or not to perform re-execution via the re-execution unit, or whether or not an operation of forming the image on the plurality of recording media is available.

12. The image forming apparatus according to claim 1,
wherein the correction unit obtains a plurality of conditions as the condition and, in a case where the number of recording media necessary for obtaining the plurality of conditions varies, adopts a larger value of the number of necessary recording media as the specific number.

13. An image forming program causing a computer to function as each portion of the image forming apparatus according to any one of claims 1 to 12.

14. An image forming system comprising:
an image forming unit that forms an image on a recording medium under a predetermined condition;
a correction unit that, in continuously forming the image on a plurality of recording media, corrects the condition in accordance with a reading result of the image formed on a specific number of recording media immediately after a start of forming of the image; and
a processor configured to form the image such that the recording medium on which the image is formed under the condition corrected by the correction unit is set as a first recording medium.

## Amended claims

### Amended claims in accordance with Rule 137(2) EPC.

1. An image forming apparatus (1) comprising:
an image forming unit (3) that forms an image on a recording medium (6) under a predetermined condition;
a correction unit (101) that, in continuously forming the image on a plurality of recording media (6), corrects the condition in accordance with a reading result of the image formed on a specific number of recording media (6) immediately after a start of forming of the image; and
a re-execution unit (101) that forms the image again under the condition corrected by the correction unit,
wherein an image forming operation is stopped until correction made by the correction unit is reflected on the image,
wherein the image forming apparatus (1) is **characterized in that**:
the image is formed such that the recording medium (6) on which the image is formed under the condition corrected by the correction unit is set as at least a first recording medium corresponding to a first page, and the first recording medium is discharged to a tray (5b) for normal printed matter; and
a plurality of recording media formed before the correction is reflected are discharged to a tray (5a) different from the tray for the normal printed matter.

2. The image forming apparatus (1) according to claim 1,
wherein the re-execution unit (101) forms the image again for only the recording medium (6) for which the reading result of the image exceeds a predetermined threshold value (105c) among the specific number of recording media (6).

3. The image forming apparatus (1) according to claim 1,
wherein the correction unit (101) executes a correction operation between an end of a reading operation of the image and forming of the image again via the re-execution unit.

4. The image forming apparatus (1) according to claim 3,
wherein the correction operation executed by the correction unit is a correction operation not causing forming and reading of the image on the recording medium (6).

5. The image forming apparatus (1) according to claim 1,
wherein the re-execution unit (101) changes a part of the image in executing an operation of forming the image again.

6. The image forming apparatus (1) according to claim 5,
wherein the image includes a correction image (201, 202) for obtaining a correction amount of the condition in addition to a request image requested by a user, and
the re-execution unit changes the image to the image excluding the correction image.

7. The image forming apparatus (1) according to claim 1,
wherein the tray (5a) different from the tray for the normal printed matter is a spare discharge portion that discharges at least the recording medium for which the reading result of the image exceeds a predetermined threshold value (105c) among the specific number of recording media (6).

8. The image forming apparatus (1) according to claim 1, further comprising:
a setting unit (104) that sets at least one of a setting of the specific number, whether or not to perform re-execution via the re-execution unit, or whether or not an operation of forming the image on the plurality of recording media (6) is available.

9. The image forming apparatus (1) according to claim 1,
wherein the correction unit (101) obtains a plurality of conditions as the condition and, in a case where the number of recording media (6) necessary for obtaining the plurality of conditions varies, adopts a larger value of the number of necessary recording media (6) as the specific number.

10. An image forming program (105a) causing a computer to function as each portion of the image forming apparatus (1) according to any one of claims 1 to 9.

11. An image forming system comprising:
an image forming unit (3) that forms an image on a recording medium (6) under a predetermined condition;
a correction unit (101) that, in continuously forming the image on a plurality of recording media (6), corrects the condition in accordance with a reading result of the image formed on a specific number of recording media (6) immediately after a start of forming of the image; and
a re-execution unit (101) that forms the image again under the condition corrected by the correction unit,
wherein an image forming operation is stopped until correction made by the correction unit is reflected on the image,
wherein the image forming system is **characterized in that**:
the image is formed such that the recording medium (6) on which the image is formed under the condition corrected by the correction unit is set as at least a first recording medium corresponding to a first page, and the first recording medium is discharged to a tray (5b) for normal printed matter; and
a plurality of recording media formed before the correction is reflected are discharged to a tray (5a) different from the tray for the normal printed matter.
